# EUROPEAN PATENT APPLICATION

(11) **EP 4 848 867 A1**
(43) Date of publication of application: **02.12.2026**
(21) Application number: 24919284.0
(22) Date of filing: 24.01.2024
(51) Int. Cl.: H04W 72/512

(54) **WIRELESS COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: LI, Jianuo, Dongguan, Guangdong 523860 (CN); BAI, Nianhe, Dongguan, Guangdong 523860 (CN); LU, Liuming, Dongguan, Guangdong 523860 (CN); LUO, Chaoming, Dongguan, Guangdong 523860 (CN); GAO, Ning, Dongguan, Guangdong 523860 (CN); LI, Yapu, Dongguan, Guangdong 523860 (CN); HOU, Ronghui, Dongguan, Guangdong 523860 (CN)
(74) Representative: RGTH
(86) International application number: PCT/CN2024/073901
(87) International publication number: WO 2025/156169

(57) **Abstract**

Provided are wireless communication methods and communication devices. A wireless communication method comprises: a first AP sending first information to a first STA, the first information comprising a first operating parameter, wherein the first operating parameter is a sub-channel or sub-band operating parameter used by the first STA within a first predetermined service period. In the present application, a first AP can indicate, by means of first information, a sub-channel or sub-band operating parameter within a first predetermined service period to a first STA; and on the basis of the sub-channel or sub-band operating parameter, the first STA can determine a sub-channel or sub-band used within the first predetermined service period, such that the switching to a secondary channel can be performed when a primary channel cannot be used, thereby helping to ensure the timely transmission of a low-latency service.

## Description

### TECHNICAL FIELD

This application relates to the field of communication technologies, and more specifically, to a wireless communication method and a communication device.

### BACKGROUND

Reducing latency is an important goal for some communication systems. Particularly, for low-latency traffic, reducing latency is especially important. During certain service periods (for example, within a restricted target wake time (R-TWT) period), when a station (STA) cannot use the primary channel, the STA cannot guarantee timely transmission of its low-latency traffic.

### SUMMARY

This application provides a wireless communication method and a communication device. Various aspects involved in this application are introduced below.

According to a first aspect, a wireless communication method is provided, including: transmitting, by a first access point (access point, AP), first information to a first STA, where the first information includes a first operation parameter, and the first operation parameter is a subchannel or subband operation parameter adopted by the first STA during a first predetermined service period.

According to a second aspect, a wireless communication method is provided, including: receiving, by a first STA, first information transmitted by a first AP, where the first information includes a first operation parameter, and the first operation parameter is a subchannel or subband operation parameter adopted by the first STA during a first predetermined service period.

According to a third aspect, a communication device is provided. The communication device is a first AP, and includes: a transmitting module, configured to transmit first information to a first STA, where the first information includes a first operation parameter, and the first operation parameter is a subchannel or subband operation parameter adopted by the first STA during a first predetermined service period.

According to a fourth aspect, a communication device is provided. The communication device is a first STA, and includes: a receiving module, configured to receive first information transmitted by a first AP, where the first information includes a first operation parameter, and the first operation parameter is a subchannel or subband operation parameter adopted by the first STA during a first predetermined service period.

According to a fifth aspect, a communication device is provided, including a memory and a processor, where the memory is configured to store a program, and the processor is configured to invoke the program in the memory to cause the communication device to execute the method according to the first aspect.

According to a sixth aspect, a communication device is provided, including a memory and a processor, where the memory is configured to store a program, and the processor is configured to invoke the program in the memory to cause the communication device to execute the method according to the second aspect.

According to a seventh aspect, an apparatus is provided, including a processor, configured to invoke a program from a memory to cause the apparatus to execute the method according to the first aspect or the second aspect.

According to an eighth aspect, a chip is provided, including a processor, configured to invoke a program from a memory to cause a device installed with the chip to execute the method according to the first aspect or the second aspect.

According to a ninth aspect, a computer-readable storage medium storing a program is provided, where the program causes a computer to execute the method according to the first aspect or the second aspect.

According to a tenth aspect, a computer program product is provided, including a program, where the program causes a computer to execute the method according to the first aspect or the second aspect.

According to an eleventh aspect, a computer program is provided, where the computer program causes a computer to execute the method according to the first aspect or the second aspect.

In this application, the first AP can indicate, via the first information, the subchannel or subband operation parameter for the first predetermined service period to the first STA. Based on the subchannel or subband operation parameter, the first STA can determine the subchannel or subband to be used during the first predetermined service period, thereby enabling switching to a secondary channel when the primary channel is unavailable, and facilitating ensuring timely transmission of a low-latency traffic.

### BRIEF DESCRIPTION OF DRAWINGS

FIG. 1A to FIG. 1B are schematic structural diagrams of a wireless communication system to which embodiments of this application are applicable.
FIG. 2 is an example diagram of an HE SST process.
FIG. 3 is an example diagram of a DSO process.
FIG. 4 is an example diagram of a secondary channel access process.
FIG. 5 is an example diagram of a trigger-enabled R-TWT process.
FIG. 6 is an example diagram of a non-trigger-enabled R-TWT process.
FIG. 7 is a schematic flowchart of a wireless communication method provided by an embodiment of this application.
FIG. 8 is a schematic flowchart of a wireless communication method provided by another embodiment of this application.
FIG. 9 is a schematic flowchart of a wireless communication method provided by another embodiment of this application.
FIG. 10 is a schematic flowchart of a wireless communication method provided by another embodiment of this application.
FIG. 11 is a schematic flowchart of a wireless communication method provided by another embodiment of this application.
FIG. 12 is a schematic flowchart of a wireless communication method provided by another embodiment of this application.
FIG. 13 is a schematic flowchart of a wireless communication method provided by another embodiment of this application.
FIG. 14 is a schematic structural diagram of a TWT element provided by an embodiment of this application.
FIG. 15 is a schematic structural diagram of a TWT element provided by another embodiment of this application.
FIG. 16 is a schematic structural diagram of a TWT element provided by another embodiment of this application.
FIG. 17 is a schematic structural diagram of an EHT operation element provided by an embodiment of this application.
FIG. 18 is a schematic structural diagram of an EHT capability element provided by an embodiment of this application.
FIG. 19 is a schematic workflow diagram of initiating a DSO exchange sequence by an AP.
FIG. 20 is a schematic workflow diagram of entering a DSO exchange sequence by a STA.
FIG. 21 is a schematic flowchart of a DSO R-TWT process provided by Embodiment 1 of this application.
FIG. 22 is a schematic flowchart of a DSO R-TWT process provided by Embodiment 2 of this application.
FIG. 23 is a schematic flowchart of a DSO R-TWT process provided by Embodiment 3 of this application.
FIG. 24 is a schematic flowchart of a DSO R-TWT process provided by Embodiment 4 of this application.
FIG. 25 is a schematic flowchart of a DSO R-TWT process provided by Embodiment 5 of this application.
FIG. 26 is a schematic flowchart of a DSO R-TWT process provided by Embodiment 6 of this application.
FIG. 27 is a schematic flowchart of a DSO R-TWT process provided by Embodiment 7 of this application.
FIG. 28 is a schematic flowchart of a DSO R-TWT process provided by Embodiment 8 of this application.
FIG. 29 is a schematic flowchart of a DSO R-TWT process provided by Embodiment 9 of this application.
FIG. 30 is a schematic flowchart of a DSO R-TWT process provided by Embodiment 10 of this application.
FIG. 31 is a schematic flowchart of a DSO R-TWT process provided by Embodiment 11 of this application.
FIG. 32 is a schematic flowchart of a DSO R-TWT process provided by Embodiment 12 of this application.
FIG. 33 is a schematic flowchart of a DSO R-TWT process provided by Embodiment 13 of this application.
FIG. 34 is a schematic flowchart of a DSO R-TWT process provided by Embodiment 14 of this application.
FIG. 35 is a schematic flowchart of a DSO R-TWT process provided by Embodiment 15 of this application.
FIG. 36 is a schematic flowchart of a DSO R-TWT process provided by Embodiment 16 of this application.
FIG. 37 is a schematic flowchart of a DSO R-TWT process provided by Embodiment 17 of this application.
FIG. 38 is a schematic flowchart of a DSO R-TWT process provided by Embodiment 18 of this application.
FIG. 39 is a schematic flowchart of a DSO R-TWT process provided by Embodiment 20 of this application.
FIG. 40 is a schematic structural diagram of a communication device provided by an embodiment of this application.
FIG. 41 is a schematic structural diagram of a communication device provided by another embodiment of this application.
FIG. 42 is a schematic structural diagram of a communication apparatus provided by an embodiment of this application.

### DESCRIPTION OF EMBODIMENTS

The technical solutions in this application are described below with reference to the accompanying drawings.

### Communication System

The technical solutions of embodiments of this application may be applied to various communications system, for example, a wireless local area network (wireless local area networks, WLAN), a wireless fidelity (wireless fidelity, Wi-Fi), a high performance radio local area network (high performance radio local area networks, HIPELAN), a wide area networks (wide area networks, WAN), a cellular network, or another communications system. For another example, the technical solutions provided in embodiments of this application may be applied to the communications system using the 802.11 standard. For example, the 802.11 standard includes but is not limited to a 802.11ax standard, a 802.11be standard, a 802.11bn standard, a next-generation 802.11 standard, and the like.

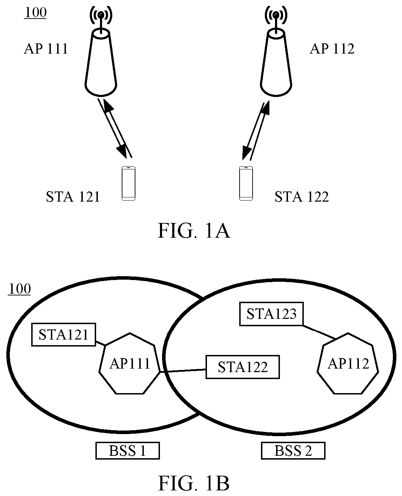

FIG. 1A~ FIG. 1B show a schematic diagram of a communications system to which an embodiment of this application is applicable. Referring to FIG. 1A, a communications device in the communications system 100 may include an access point (access point, AP) 111, an AP112, a STA121, and a STA122. The STA121 may access a network by using the AP111, and the STA122 may access the network by using the AP112. Referring to FIG. 1B, the communications device in the communications system 100 may include an access point AP111, an AP112, a STA121, a STA122, and a STA123. The STA121 and the STA122 may access a network by using the AP111, and the STA123 may access the network by using the AP112.

In some implementations, the STA may establish an association relationship with an AP, and then the STA and the AP that have the association relationship may communicate with each other. Referring to FIG. 1A, communication may be performed between the AP 111 and the STA 121 after the association relationship is established, and communication may be performed between the AP 112 and the STA 122 after the association relationship is established.

In some implementations, communication in the communications system 100 may be communication between the AP and the non-AP STA, or may be communication between the non-AP STA and the non-AP STA, or communication between the STA and the peer STA, where the peer STA may refer to a device that communicates with the STA, for example, the peer STA may be an AP, or may be an non-AP STA.

It should be understood that, in FIG. 1A to FIG. 1B, two AP STAs and several non-AP STAs are exemplarily shown. The communications system 100 may also include more AP STAs, or the communications system 100 may include another quantity of non-AP STA. This is not limited in embodiments of this application.

In addition, the foregoing communications system may be applied to a scenario of multi-device coordination, such as a scenario of multi-AP (multiple access points, Multi-AP) coordination or multi-station coordination.

In embodiments of this application, names of the AP and/or the STA are not limited. In some scenarios, the AP may also be referred to as an AP STA, that is, in a sense, the AP is also a STA. In other scenarios, the STA may also be referred to as a non-AP STA (non-AP STA).

In some scenarios, the foregoing communications device may also be "multi-link device (multi-link device, MLD)", that is, a device that may perform communication by using multiple communications links, where the multiple communications links may include communication links of different frequency band, for example, may include millimeter-wave frequency band and/or low-frequency frequency band. Generally, if the multi-link device is an AP, the AP may also be referred to as a "multi-link AP". If the multi-link device is a STA, the STA may also be referred to as a "multi-link STA".

In embodiments of this application, the AP may be an access point device in a wireless network.

In some implementations, a role of the STA in the communications system is not absolute. In some scenarios, the STA may serve as an AP. For example, in a scenario in which a mobile phone is connected to a route, the mobile phone may be a non-AP STA; and in a case in which the mobile phone serves as a hotspot of another mobile phone, the mobile phone serves as an AP.

In embodiments of this application, the STA may be a device with a wireless transceiver function, for example, may support an 802.11 series protocol, and may communicate with the AP or another STA. For example, the STA is any user communications device that allows the user to communicate with the AP and further communicate with the WLAN. The STA is, for example, a user equipment (user equipment, UE), a mobile station (mobile station, MS), a mobile terminal (mobile terminal, MT), an access terminal, a user unit, a user station, a mobile station, a mobile platform, a remote station, a remote terminal, a mobile device, a user terminal, a terminal, a wireless communication device, a user agent, or a user apparatus.

The STA in embodiments of this application may alternatively be a device providing a user with voice/data connectivity, for example, a handheld device, a vehicle-mounted device, or the like having a wireless connection function. For example, the STA is a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

In addition, the AP device in embodiments of this application may be a device configured to communicate with the STA, the AP device may be a network device in the wireless local area network, and the AP device may be configured to communicate with the STA by using the wireless local area network.

From a perspective of a communications standard supported by the AP, the AP may be a device supporting the 802.11be standard in some implementations. The AP may also be a device that supports WLAN standards of multiple current and future 802.11 families, such as 802.11ax, 802.11ac, 802.11n, 802.11g, 802.11b, and 802.11a.

From the perspective of the communication standard supported by the STA, in some implementations, the non-AP STA may support the 802.11be standard. The non-AP STA may also support multiple current and future wireless local area network (wireless local area networks, WLAN) standards of the 802.11 family, such as 802.11ax, 802.11ac, 802.11n, 802.11g, 802.11b, and 802.11a.

In embodiments of this application, frequency bands supported by the WLAN technology are not limited. In some implementations, the WLAN technology may support the following frequency band, which may include but is not limited to a low frequency frequency band (e.g., 2.4 GHz, 5 GHz, 6GHz) and a high frequency frequency band (e.g., 45GHz, 60GHz).

It should be understood that a specific form of the STA and the AP device is not specifically limited in embodiments of this application, which is merely exemplary description herein.

### Channel Constraints

With the rapid development of wireless network technology, the demand for throughput and latency in wireless communication is increasing, and the bandwidth supported by Wi-Fi standards has now reached 320 megahertz (MHz). However, the rules established in current standards impose the following constraints on 802.11 transmissions of various bandwidths (20/40/80/160/320 MHz): the primary 20 MHz channel must be idle, for a STA to access a large-bandwidth channel (>20 MHz); if the primary channel is busy, for example, due to overlapping basic service set (overlapping basic service set, OBSS) interference, the STA cannot perform transmission on any idle secondary channel. For instance, in the scenario of the communication system shown in FIG. 1B, the coverage of AP111 is basic service set (BSS) 1, the coverage of AP112 is BSS2, and there is an overlapping portion between BSS1 and BSS2. Therefore, STA122 is within the OBSS range, AP111 is not within the OBSS range, and AP111 has completed R-TWT negotiation with STA121; STA122 cannot use the primary channel currently due to OBSS interference on the primary channel, and thus cannot transmit data within its R-TWT SP. This limitation results in severe underutilization of spectrum, especially for large-bandwidth channel access, greatly reducing resource utilization. Additionally, when the bandwidths supported by devices are mismatched, particularly when an AP interacts with a STA of a smaller bandwidth, it results in waste of the AP bandwidth capability.

### High Efficiency (high efficiency, HE) Subchannel Selective Transmission (subchannel selective transmission, SST)

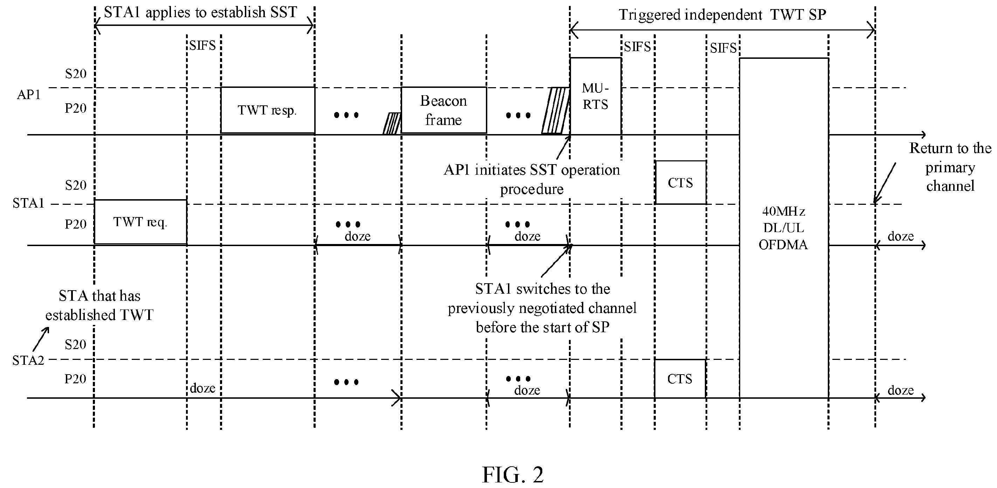

To enable a small-bandwidth STA to participate in large-bandwidth orthogonal frequency division multiple access (orthogonal frequency division multiple access, OFDMA) transmission, that is, to address the issue of bandwidth capability mismatch between APs and STAs, related technologies propose an SST operation for the trigger-enabled TWT agreement based on individual target wake time (target wake time, TWT) in HE. For example, the operation of HE SST may be illustrated in FIG. 2, where STA2 has established an individual TWT with AP1, and a service period (service period, SP) of STA1 overlaps with that of STA2. P20 indicates the primary 20 MHz channel, and S20 indicates the secondary 20 MHz channel.

In HE SST, a non-AP STA and an HE SST AP establish an SST operation by negotiating an individual trigger-enabled TWT, and indicate the negotiated secondary channel by using a TWT channel field in a TWT element within a TWT request (request, req.)/response (response, resp.). Within SPs, the HE SST AP allocates individually addressed resource units (RUs) that address HE SST non-AP STAs located within the subchannel indicated in the TWT channel field of the TWT response. At the start of the TWT, the HE SST non-AP STA may use the subchannel indicated by the negotiated TWT channel field. When the operating channel or channel bandwidth of the AP changes, or any secondary channel of the triggered TWT is not within a new operating channel or channel bandwidth, the trigger-enabled TWT is terminated, and SST is destroyed.

As shown in FIG. 2, the STA1 transmits a TWT req. to the AP1 on the primary channel P20, and the TWT req. may carry an SST request. After a short interframe space (short interframe space, SIFS), the AP1 transmits a TWT resp. to the STA1 in response to a request from the STA1, and the TWT resp. may carry the negotiated secondary channel. After interacting with the AP, the STA1 enters a doze state, then wakes up at a specified instant to receive a beacon frame from the AP1, and then enters the doze state again until a SP allocated to the STA1 by the AP1 arrives. Before the SP for the STA1 arrives, the STA1 may switch to a previously negotiated channel before the TWT SP begins. During the TWT SP, the STA1 may transmit a clear to send (clear to send, CTS) frame to the AP1 on the secondary channel S20. Subsequently, data exchange in uplink (uplink, UL) or downlink (downlink, DL) may be performed between the STA1 and the AP1 via OFDAM. When the TWT SP ends, the STA1 may return to the primary channel P20.

One limitation of the SST is its static channel switching mode (SP-based channel switching). This channel switching mode requires the STA to remain on the secondary channel throughout the entire SP, which is not flexible enough. Moreover, SPs are periodic, but OBSS interference is not necessarily periodic, so a gain obtained from static switching may not necessarily be higher than a gain obtained from using only the primary channel. Another limitation of the SST is that HE SST only allows an 80 MHz STA to operate on the secondary 80 MHz channel of a 160 MHz operating bandwidth, or allows a 20 MHz STA to operate outside the primary 20 MHz channel of a wider operating bandwidth. For standards like 11be and 11bn that have increased the Wi-Fi bandwidth to 320 MHz, the SST may not scale well or implement an operation that schedule a 160 MHz STA to a secondary 160 MHz channel.

### Dynamic Subband/Subchannel Operation (dynamic subband/subchannel operation, DSO)

To address the capability mismatch between an AP and a non-AP with a smaller bandwidth when they interact, related technologies propose the DSO operation. Different from SST where the STA initiates the request to switch to a secondary channel, DSO is controlled and scheduled by the AP.

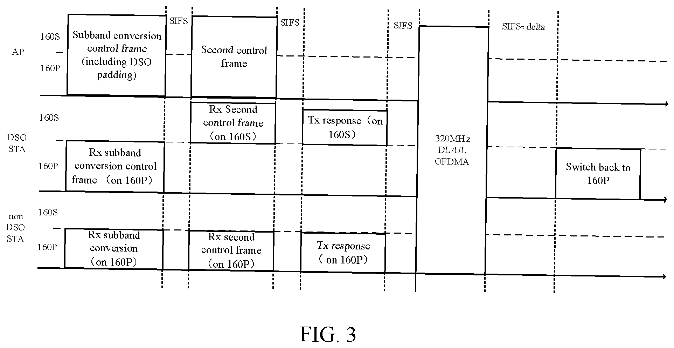

For example, the DSO operation may be illustrated in FIG. 3. The DSO operation allows a 320 MHz AP to dynamically indicate transmit (Tx)/receive (Rx) opportunities for a 160 MHz non-AP on the secondary 160 MHz (160S) (extendable to any AP/non-AP bandwidth combination where the AP supports a higher bandwidth than the non-AP). Specifically, at the beginning of any transmission opportunity (transmission opportunity, TXOP) on a 320 MHz bandwidth, the AP transmits an indication to the non-AP supporting the DSO, instructing the non-AP to switch to the secondary 160 MHz within this TXOP, and then continue to perform frame exchange on the secondary 160 MHz. At the end of the TXOP, the DSO non-AP switches back to the primary 160 MHz (160P) for operating. For example, a STA may consider that the TXOP ends when the STA fails to detect data within time SIFS + δ (delta), where the specific value of delta depends on the implementation.

Although the DSO can mitigate some disadvantages of SST to some extent, scheduling the STA to switch to the secondary channel by using the control frame (MU-RTS/buffer status report poll (buffer status report poll, BSRP)) causes significant latency overhead. Because the STA only starts switching channels after receiving the subband-switch control frame, during the channel switching, this frame needs to be continuously padded until the STA switches to the secondary channel.

### Secondary Channel Access (secondary-channel-access)

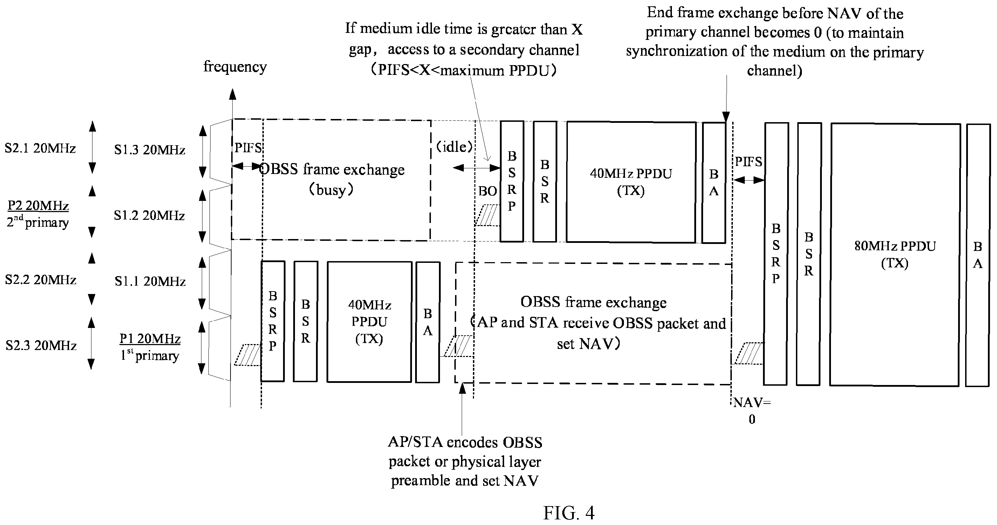

Related technologies propose a secondary channel access operation method to solve a problem that the STA depends on the primary 20 MHz channel when accessing channels. As shown in FIG. 4, with this method, the AP and the STA can perform data interaction on an available secondary channel, when the primary channel is busy and the secondary channel is available, and the AP and the STA have consistent knowledge of the primary channel state.

If a first primary channel (P1) of the AP is busy during network allocation vector (network allocation vector, NAV) duration, while a second primary channel (P2) of the AP is idle in pending duration, the AP performs backoff and initiates a TXOP to a target STA by using a BSRP trigger frame or request to send (request to send, RTS) frame (control frame) on the second primary channel.

If a first primary channel of the STA is busy during the NAV duration, the STA moves to the second primary channel and waits for a BSRP or RTS (control frame) from a sender, and returns to the first primary channel before the NAV of the first primary channel becomes 0.

In FIG. 4, the sender is the AP and the receiver is the STA, and their roles may be interchanged.

### Non-Primary Channel Utilization Follow-up (non-primary channel utilization follow-up)

For the problem where the STA cannot use idle secondary channels when the primary channel is busy, related technologies propose a solution: allowing to use another part of the operating bandwidth when a portion of the operating bandwidth is detected to be busy. Different device capabilities of the sender and the receiver are distinguished, with no restrictions on sender capability, and two operational modes are analyzed and discussed for two receiver capabilities (parallel channel listening, sequential channel listening).

When receiver capability type 1 (parallel channel listening) is selected, the device can use secondary channels in a period during which the device is not restricted by the occupancy of the primary 20 MHz channel. Since the receiver can listen to preambles in parallel on other channels, it does not matter whether the receiver is aware of OBSS on the primary 20 MHz channel.

When receiver capability type 2 (sequential channel listening) is selected, it requires that the sender and the receiver have the same knowledge of the primary 20 MHz channel occupied by OBSS and any other unavailable channels. Based on this, the device is allowed to use the secondary channel when the primary 20 MHz channel is busy. Additionally, once the duration determined by clear channel assessment (clear channel assessment, CCA) (e.g., NAV or physical layer protocol data unit (PPDU) length) on the primary 20 MHz channel expires, control must return to the primary 20 MHz channel.

### R-TWT

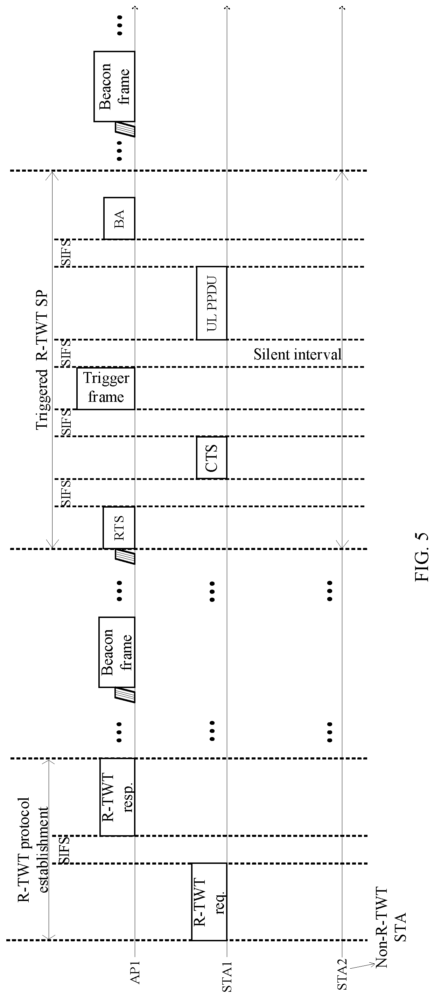

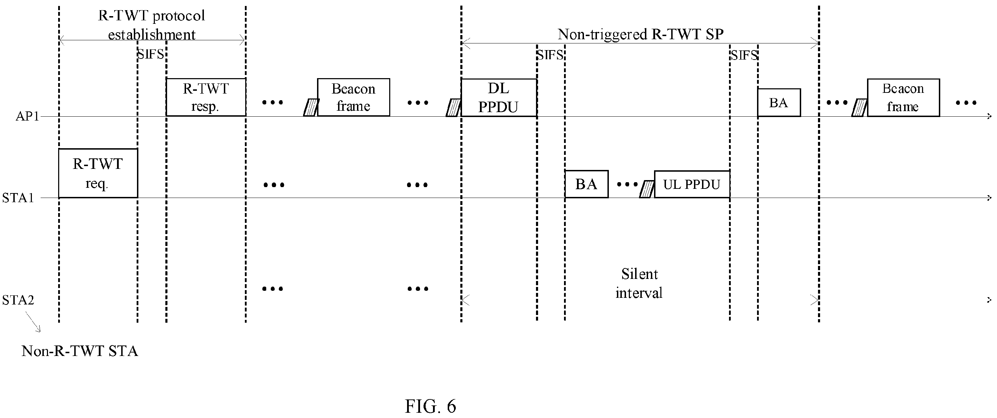

R-TWT operation enables a BSS to use enhanced medium access protection and resource reservation mechanisms to deliver latency-sensitive traffic. The establishment of R-TWT member uses the same process as establishing broadcast TWT members, except that the broadcast TWT element carried in a management frame used to establish the member includes one or more restricted TWT parameter set fields. The R-TWT scheduling AP and the R-TWT scheduled STA should set the restricted TWT traffic info field to identify a traffic identifier (traffic identifier, TID) of the latency-sensitive traffic carried in DL and UL by the R-TWT member. The TID specified in the restricted TWT traffic info field of the TWT element in the TWT response indicating accepting the TWT is called R-TWT DL TID(s) or R-TWT UL TID(s), collectively referred to as R-TWT TID(s). When the TID-to-link mapping update results in none of the R-TWT TIDs of the R-TWT member being mapped to a link that sets up the R-TWT member, the corresponding R-TWT member is considered destroyed. The R-TWT scheduling AP may schedule at most one quiet interval overlapping with an R-TWT SP. If such a quiet interval is scheduled, the quiet interval should have a certain duration and should start simultaneously with the corresponding R-TWT SP. To schedule overlapping quiet intervals for one or more R-TWT SPs belonging to one or more periodic or aperiodic R-TWT schedules, an extremely high throughput (EHT) AP may convey one or more quiet elements in beacon and probe response frames. This causes non-member STAs to remain quiet and assigns member STAs a higher priority to transmit low-latency data during the SP. An example of trigger-enabled R-TWT operation is shown in FIG. 5, and an example of non-trigger-enabled R-TWT operation is shown in FIG. 6.

The R-TWT technology enables BSSs to use enhanced medium access protection and resource reservation mechanisms to better deliver latency-sensitive traffic, and is already one of the important technologies to ensure the transmission of low-latency services. However, the R-TWT currently does not support channel allocation during negotiation or secondary channel access within R-TWT SPs. Therefore, in some scenarios where the primary channel of the STA is unavailable (e.g., OBSS interference scenarios), the R-TWT technology cannot ensure timely transmission of its low-latency traffic.

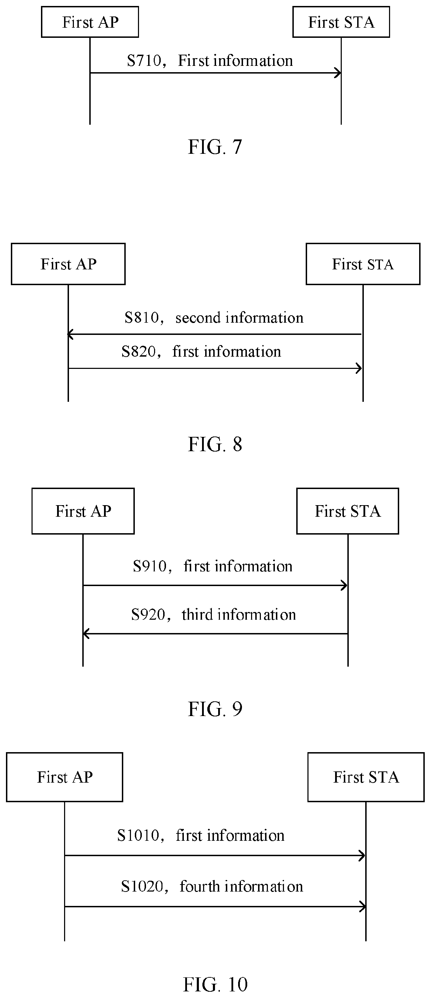

Based on this, a method in embodiments of this application is described in detail below with reference to FIG. 7.

As shown in FIG. 7, an embodiment of this application provides a wireless communication method. For ease of understanding, the first AP and the first STA are used below to represent devices applicable to this method. Here, the first AP may be any AP described above, and the first STA may be any STA described above.

Referring to FIG. 7, the wireless communication method of an embodiment of this application may include step S710. In step S710, the first AP transmits first information to the first STA. The first information may include a first operation parameter, which may be a subchannel or subband operation parameter adopted by the first STA during a first predetermined service period. Here, the subchannel may be a subchannel constituting an operating channel of the first AP and the first STA, for example, 16 20MHz subchannels constituting a 320MHz operating channel. The subchannel or subband operation parameter may be used to indicate the usage of subchannels, for example whether a subchannel may be used by the first STA. Therefore, the first STA may determine the subchannel or subband available during the first predetermined service period based on the first operation parameter.

For example, the first predetermined service period may be the R-TWT SP described above. After the first predetermined service period is established, the first STA may determine the available subchannel or subband based on the first operation parameter. Establishing the first predetermined service period here may refer to the first STA establishing R-TWT membership with the first AP (R-TWT membership setup). For instance, the first information may be used to update parameters related to dynamic subband/subchannel operation (DSO operation) in the parameters of the R-TWT SP. The first information may be carried in an R-TWT response message or an R-TWT information frame. Alternatively, the first information may be used to update DSO operation parameters within the R-TWT SP, and the first information may be carried in a channel state information (CSI) frame or data frame within the R-TWT SP. A range of subchannels or subbands indicated by the updated DSO operation parameter is smaller than a range of subchannels or subbands indicated by the parameter of the R-TWT SP.

In this application, the first AP can indicate subchannel or subband operation parameters for the first predetermined service period to the first STA via the first information. Based on the subchannel or subband operation parameters, the first STA can determine the subchannel or subband to be used during the first predetermined service period, so that the first STA switches to a secondary channel when the primary channel is unavailable, thereby facilitating ensuring timely transmission of the low-latency traffic.

The first operation parameters may correspond to dynamic subchannel or subband operation, that is, the first AP may dynamically indicate the first operation parameters, thereby facilitating increasing flexibility in subchannel usage. For example, when the first predetermined service period is the R-TWT SP described above, the first AP may dynamically indicate subchannel or subband operation parameters within the SP, so this R-TWT SP is an R-TWT SP with DSO characteristics (for ease of understanding, referred to as "DSO R-TWT SP" below). For instance, a 320 MHz AP may dynamically indicate subchannel or subband operation parameters to dynamically indicate Tx/Rx opportunities for a 160 MHz non-AP on the secondary 160 MHz (extendable to any AP/non-AP bandwidth combination where the AP supports a higher bandwidth than the non-AP). The first operation parameters may be used to indicate the subchannel or subband that the first AP allows the first STA to use during the first predetermined service period, that is, the subchannel or subband to be used by the first STA during the first predetermined service period may be determined based on permission of the first AP, thereby facilitating ensuring that the subchannel operation of the first STA meets requirements of the first AP.

As shown in FIG. 8, before the first AP transmits the first information to the first STA, the wireless communication method in the embodiments of this application may further include step S810. In step S810, the first AP receives second information transmitted by the first STA. The second information may include first feedback information, which may be used to indicate feedback information on a primary channel and/or a secondary channel from the first STA. Therefore, the first AP can determine the first operation parameter to be transmitted to the first STA based on the first feedback information, thereby ensuring that the first operation parameter conforms to the operating conditions of the primary channel and/or secondary channel. Further, the first feedback information may include interference information of the primary channel and/or secondary channel. For example, the interference information may include interference type information and interference occupancy rate information. Among these, the interference type information may be used to indicate a type of channel interference, such as OBSS interference, Bluetooth interference, or certain periodic interference. The interference occupancy rate information may be used to indicate an occupancy rate of channel interference. For example, when the channel interference type is OBSS interference, the interference occupancy rate information may represent the OBSS interference occupancy rate on the channel. The first AP can determine the first operation parameter based on the interference information of the primary channel and/or secondary channel, thereby reducing the impact of channel interference on data transmission.

The second information may further include a second operation parameter, which may be used to indicate a subchannel or subband that the first STA expects to use during the first predetermined service period. Therefore, the first AP can also determine the first operation parameter to be transmitted to the first STA based on the second operation parameter, thereby ensuring that the first operation parameter conforms to expectation of the first STA. It should be noted that the subchannel or subband that the first STA expects to use during the first predetermined service period does not exceed the maximum bandwidth supported by the first STA. For example, if the maximum bandwidth supported by the first STA is 320 MHz, the subchannel or subband that the first STA expects to use should not exceed a range of 16 20MHz subchannels. If the first AP has indicated a channel list to the first STA before establishment of the first predetermined service period, the first STA may select the subchannel or subband that the first STA expects to use during the first predetermined service period from the channel list. If the first STA is a STA that supports the 20MHz-only operating mode, the first STA may indicate one subchannel or subband that the first STA expects to use during the first predetermined service period.

The first information may further include first indication information, which may be used to indicate a recommendation from the first AP regarding a channel to be used by the first STA during the first predetermined service period. That is, in addition to indicating the first operation parameter to the first STA, the first AP may also indicate, to the first STA, recommendations regarding channel usage during the first predetermined service period, thereby being beneficial for the first STA to more reasonably select subchannels during the first predetermined service period. For example, the first indication information may indicate the subchannel selected preferentially by the first STA during the first predetermined service period according to a recommendation of the first AP. As another example, the first indication information may also indicate that the first STA selects different subchannels or subbands based on different channel conditions (such as channel interference types) during the first predetermined service period, according to a recommendation of the first AP.

The following describes the indication manners for the first information and the second information. In the following description, it is assumed that the first information includes the first operation parameter and the first indication information, and the second information includes the first feedback information and the second operation parameter. It should be noted that the following introduction does not limit the content included in the first information and the second information. In specific implementations, the first information may not include the first indication information, and the second information may not include the second operation parameter.

As an example, the first AP and the first STA may exchange the first information and the second information during negotiation of the first predetermined service period. That is, the first AP and the first STA may first exchange the first information and the second information during the negotiation, and then initiate the first predetermined service period. For example, if the first STA in the first predetermined service period expects to change the subchannel or subband operating parameters used during the first predetermined service period due to the operating conditions of the primary channel and/or secondary channel, the first STA may negotiate with the first AP to re-establish a first predetermined service period. In this case, the first STA may indicate the operating conditions of the primary channel and/or secondary channel and the subchannel or subband that the first STA expects to use, to the first AP through the second information. Based on the second information, the first AP may indicate the subchannel or subband operation parameters for the first predetermined service period and recommendations for channel usage during the first predetermined service period, to the first STA through the first information. In this way, the first STA can timely switch subchannels or subbands based on the operating conditions of the primary channel and/or secondary channel during the first predetermined service period, thereby ensuring timely transmission of services. The following provides a detailed description to the exchange of the first information and the second information during the negotiation of the first predetermined service period.

The first information may be carried in a first message, which may be used to respond to a request for establishing the first predetermined service period. For example, when the first predetermined service period is an R-TWT SP, the first message may be a TWT response corresponding to the R-TWT.

The first message may include a first element, which may include a first field used to carry the first operation parameter. That is, the first operation parameter in the first information may be carried in the first field of the first element in the first message. For example, when the first message is a TWT response corresponding to R-TWT, the first element may be a TWT element in the TWT response, and the first operation parameter may be carried in a subfield of the TWT element.

The first element may further include a second field, which may be used to carry the first indication information. That is, the first indication information may be carried in the second field of the first element in the first message. For example, when the first element is a TWT element in a TWT response, the first indication information may also be carried in a subfield of the TWT element.

The first element may further include a third field, which may be used to indicate whether the first field is valid. Therefore, the first STA can determine whether to interpret the first field based on the third field, thereby saving resource overhead for the first STA. Further, the third field may be used to indicate capability information of the first AP during the first predetermined service period. For example, the third field may indicate a capability of the first AP to perform full-channel triggering during the first predetermined service period and/or to interact with the first STA on the subchannel or subband. Based on the third field, the first STA can also determine the subchannel or subband switching strategy during the first predetermined service period according to the capability information of the first AP, thereby improving the accuracy of the subchannel or subband switching strategy. For example, when the first element is a TWT element in a TWT response, the third field may be a subfield of the TWT element.

The first element may further include a fourth field, which may be used to indicate whether the second field is valid. Therefore, the first STA can determine whether to interpret the second field based on the fourth field, thereby saving resource overhead for the first STA.

The second information may be carried in a second message, which may be used to request establishment of the first predetermined service period. For example, when the first predetermined service period is an R-TWT SP, the first message may be a TWT request corresponding to R-TWT.

The second message may include a second element, which may include a fifth field used to carry the first feedback information. That is, the first feedback information may be carried in the fifth field of the second element in the second message. For example, when the second message is a TWT request corresponding to R-TWT, the second element may be a TWT element in the TWT request, and the first feedback information may be carried in a subfield of the TWT element.

The second element may further include a sixth field, which may be used to carry the second operation parameter. That is, the second operation parameter may be carried in the sixth field of the second element in the second message. For example, when the second element is a TWT element in a TWT request, the second operation parameter may also be carried in a subfield of the TWT element.

The second element may further include a seventh field, which may be used to indicate whether the fifth field is valid. Therefore, the first AP can determine whether to interpret the fifth field based on the seventh field, thereby saving resource overhead for the first AP.

The second element may further include an eighth field, which may be used to indicate whether the sixth field is valid. Therefore, the first AP can determine whether to interpret the sixth field based on the eighth field, thereby saving resource overhead for the first AP. Further, the eighth field may be used to further indicate capability information of the first STA during the first predetermined service period. For example, the eighth field may indicate a capability of the first STA to switch to the secondary channel during the first predetermined service period. Based on the eighth field, the first AP can also determine the subchannel or subband switching strategy during the first predetermined service period according to the capability information of the first STA, thereby improving the accuracy of the subchannel or subband switching strategy.

Based on the indication of the first information and the second information during the negotiation of the first predetermined service period, the wireless communication method in the embodiments of this application may further include: after successfully establishing the first predetermined service period, the first AP may exchange, during the first predetermined service period, frames with the first STA on the primary channel and/or secondary channel, and a subchannel or subband corresponding to the primary channel and/or secondary channel may be included in the subchannel or subband corresponding to the first operation parameter indicated by the first message. That is, after the first predetermined service period is established, the first STA can determine the subchannel or subband for frame exchange based on the negotiated first operation parameter.

Further, before the first AP performs frame exchange with the first STA on the primary channel and/or secondary channel, the wireless communication method in the embodiments of this application may further include: transmitting, by the first AP, an initial control frame to the first STA, where the initial control frame is used to instruct the first STA to switch to the subchannel or subband indicated by the first operation parameter. The initial control frame may include one or more of the following information: switching delay information of the first STA; identification information of the first STA; or the operating subchannel or subband corresponding to the first STA. The initial control frame may be an MU-RTS frame or a BSRP frame.

As another example, the first AP and the first STA may also exchange the first information and the second information within the first predetermined service period. For example, if the first STA in the first predetermined service period expects to change the subchannel or subband operating parameters used during the first predetermined service period due to the operating conditions of the primary channel and/or secondary channel, the first STA may directly indicate the operating conditions of the primary channel and/or secondary channel and the subchannel or subband that the first STA expects to use, to the first AP through the second information. Based on the second information, the first AP may indicate the subchannel or subband operation parameters for the first predetermined service period and recommendations for channel usage during the first predetermined service period, to the first STA through the first information. In this way, the flexibility of subchannel or subband usage within the first predetermined service period is improved, thereby ensuring timely transmission of services. The following provides a detailed description to the exchange of the first information and the second information within the first predetermined service period.

The first information may be carried in a first frame within the first predetermined service period. The first frame may be generated based on a second frame from the first STA, where the second frame carries second information (including at least the first feedback information). The first frame and the second frame may be interactive frames within the first predetermined service period, which are not limited. For example, the second frame may be a channel state information (channel state information, CSI) frame or data frame within the first predetermined service period, and the first frame may be a corresponding response frame.

Based on the indication of the first information and the second information within the first predetermined service period, the wireless communication method in the embodiments of this application may further include: exchanging, by the first AP during the first predetermined service period, frames with the first STA on the primary channel and/or secondary channel, where the subchannel or subband corresponding to the primary channel and/or secondary channel is included in the subchannel or subband corresponding to the first operation parameter indicated by the first frame. That is, within the first predetermined service period, the first STA can determine the subchannel or subband for frame exchange based on the negotiated first operation parameter.

As shown in FIG. 9, in some implementations, the wireless communication method in the embodiments of this application may further include step S920. In step S920, the first AP receives third information transmitted by the first STA, where the third information may be used to indicate that the service period is the first predetermined service period. That is, the first STA can declare to the first AP that the service period is the first predetermined service period, thereby facilitating the first AP to determine the type of the service period.

Further, the third information may be carried in a third element, which may be carried in a third message used to request establishment of the first predetermined service period. That is, the third information may be carried in the third element of the third message. Based on this, the first STA can declare the type of the service period to the first AP when requesting establishment of the first predetermined service period, i.e., during the negotiation of the first predetermined service period, thereby facilitating the first AP to make a reasonable response. For example, the third message may be a TWT request corresponding to R-TWT. In this case, the third element may be a TWT element in the TWT request, and the third information may be carried in a subfield of the TWT element.

As shown in FIG. 10, in some implementations, the wireless communication method in the embodiments of this application may further include step S1020. In step S1020, the first AP transmits fourth information to the first STA, where the fourth information may be used to indicate that the service period is the first predetermined service period. That is, the first AP can also declare to the first STA that the service period is the first predetermined service period, thereby facilitating the first STA to determine the type of the service period.

Further, the fourth information may be carried in a fourth element, which may be carried in a fourth message used to respond to a request for establishing the first predetermined service period. That is, the fourth information may be carried in the fourth element of the fourth message. Based on this, the first AP can declare the type of the service period to the first STA when responding to the request for establishing the first predetermined service period, i.e., during the negotiation of the first predetermined service period, thereby unifying understanding of the service period type by both parties. For example, the fourth message may be a TWT response corresponding to R-TWT. In this case, the fourth element may be a TWT element in the TWT response, and the fourth information may be carried in a subfield of the TWT element.

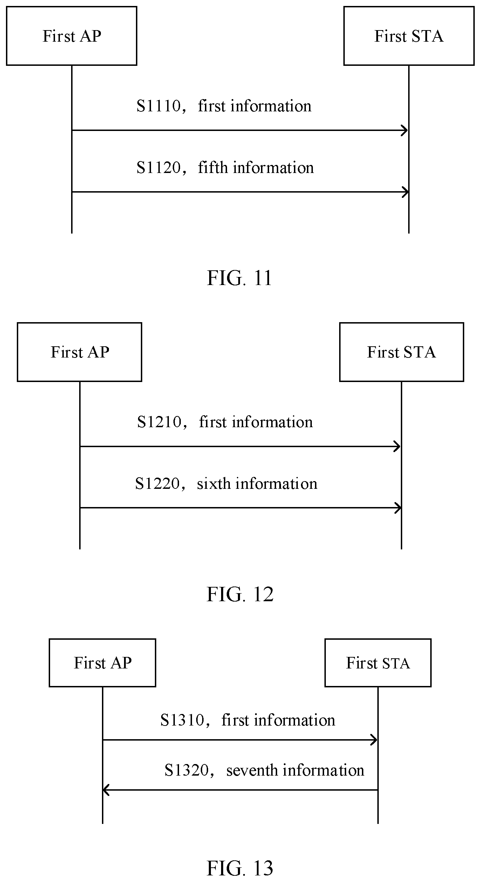

As shown in FIG. 11, in some implementations, the wireless communication method in the embodiments of this application may further include step S1120. In step S1120, the first AP transmits fifth information to the first STA, where the fifth information may be used to indicate whether the first STA is required to switch back to the primary channel when a frame exchange sequence on the secondary channel ends during the first predetermined service period. Based on the fifth information, the first STA determines the subchannel or subband selection after the frame exchange sequence on the secondary channel ends. For example, if the fifth information indicates that the first STA is unnecessary to switch back to the primary channel when the frame exchange sequence on the secondary channel ends, the first STA may continue to stay on the secondary channel and maintain a listening mode. As another example, the fifth information indicates that the first STA may switch back to the primary channel when the frame exchange sequence on the secondary channel ends. If the first STA expects to return to the primary channel, the first STA may indicate this expectation to the first AP.

The fifth information may be carried in a fifth element, which may be carried in a fifth message used to respond to the request for establishing the first predetermined service period, or the fifth message may be carried in a beacon frame within the first predetermined service period. That is, the fifth information may be carried in the fifth element of the fifth message. For example, the fifth message may be a TWT response corresponding to R-TWT, that is, the fifth information may be indicated during the negotiation of the first predetermined service period. As another example, the fifth message may also be a beacon frame within the R-TWT SP, that is, the fifth information may also be indicated within the first predetermined service period. For example, the fifth element may be an EHT operation element, and the fifth information may be carried in a subfield of the EHT operation element.

As shown in FIG. 12, in some implementations, the wireless communication method in the embodiments of this application may further include step S1220. In step S1220, the first AP transmits sixth information to the first STA, where the sixth information may be used to indicate that the first AP supports the first predetermined service period. That is, the first AP may indicate its capability information to support the first predetermined service period to the first STA, thereby ensuring the normal initiation of the first predetermined service period.

The sixth information may be carried in a sixth element, which may be carried in a beacon frame within the first predetermined service period. For example, the sixth element may be an EHT capabilities element, and the sixth information may be carried in a subfield of the EHT capabilities element.

As shown in FIG. 13, in some implementations, the wireless communication method in the embodiments of this application may further include step S1320. In step S1320, the first AP receives seventh information transmitted by the first STA, where the seventh information may be used to indicate that the first STA supports the first predetermined service period. That is, the first STA can also indicate its capability information to support the first predetermined service period to the first AP, thereby ensuring the normal initiation of the first predetermined service period.

The seventh information may be carried in a seventh element, and the seventh element may be carried in an association request frame or a probe request frame within the first predetermined service period. For example, the seventh element may be an EHT capabilities element, and the seventh information may be carried in a subfield of the EHT capabilities element.

In some implementations, the wireless communication method in the embodiments of this application may further include: if the first AP transmits data to the first STA on the primary channel within the first predetermined service period, and the first AP fails to receive a block acknowledgement (BA) for the data from the first STA, the first AP may determine a retransmission mechanism for the data based on whether the first STA has switched to a secondary channel. That is, when data transmission on the primary channel fails due to certain reasons, the AP may retransmit the data by adopting a certain error recovery mechanism, thereby quickly recovering the transmission of service data.

In which, the first AP determining the retransmission mechanism for the data based on whether the first STA has switched to a secondary channel may include: if the first STA has not switched to a secondary channel, the first AP may continue to transmit data to the first STA on the primary channel; if the first STA has switched to a secondary channel, the first AP may transmit data to the first STA on the secondary channel. Illustratively, the retransmission mechanism for the data may be referred to as an error recovery procedure. For example, in the aforementioned DSO R-TWT, the first STA may fail to receive data due to OBSS interference on the primary channel. In this case, the first STA may switch to a secondary channel to listen for signals from the first AP. If the first AP fails to receive a BA for the transmitted data from the first STA, the first AP may detect, through a full-channel triggering manner, whether the first STA transiently fails to receive the data due to situations such as Bluetooth interference or having switched to a secondary channel due to OBSS interference. In the former case, the first AP may directly retransmit the data on the primary channel; and in the latter case, the first AP may retransmit the data on the secondary channel. In this way, timely transmission of service data can be ensured.

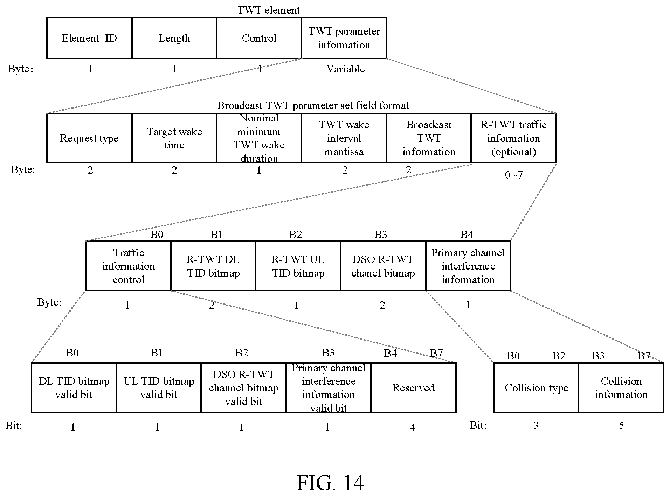

Taking the first predetermined service period being an R-TWT SP as an example, the indication manners of the first information and the second information in the embodiments of this application are illustrated below with reference to FIGs. 14 to 15. It should be noted that the indication manners for the first information and the second information may include multiple different manners and are not limited to the manners described below.

As mentioned earlier, the AP and the STA may exchange the first information and/or the second information during DSO R-TWT negotiation. During DSO R-TWT negotiation, the AP and the STA may negotiate related content through the exchange of DSO R-TWT request and DSO R-TWT response. Therefore, the first information and/or the second information may be indicated based on the DSO R-TWT request and DSO R-TWT response. The following description is made by assuming that the first information and/or the second information is indicated via a restricted TWT traffic info field or a broadcast TWT parameter set field of a TWT element in the DSO R-TWT response/request.

### Option 1: Indicating the first information and/or the second information via the restricted TWT traffic info field

As an example, the first information and/or the second information may be indicated via the restricted TWT traffic info field of the TWT element (i.e., the aforementioned first element or second element) in the DSO R-TWT response/request (i.e., the aforementioned first message/second message). Here, the first information may include the first operation parameter and the first indication information, and the second information may include the first feedback information and the second operation parameter.

As shown in FIG. 14, a DSO R-TWT channel bitmap field (i.e., the aforementioned first field or sixth field) may be added to the restricted TWT traffic info field to carry the first operation parameter or the second operation parameter, and a byte count of the restricted TWT traffic info field may be modified to 0~7. Illustratively, the DSO R-TWT channel bitmap field may occupy 2 bytes. The 16 bits of the DSO R-TWT channel bitmap valid field each, from high to low, may sequentially indicate a 20MHz subchannel or subband, capable of indicating a total of 320MHz channel, with the lowest bit indicating the primary 20MHz channel. In the DSO R-TWT response, the restricted TWT traffic info field may be used to carry the first operation parameter. In the DSO R-TWT request, the restricted TWT traffic info field may be used to carry the second operation parameter.

With reference to FIG. 14 again, a primary channel collision info field (i.e., the aforementioned second field or fifth field) may also be added to the restricted TWT traffic info field, to carry the first feedback information (taking interference information of the primary channel as an example, and further taking OBSS interference as an example for the primary channel interference information) or the first indication information. In the DSO R-TWT request, the primary channel collision info field may be used to carry the first feedback information. In the DSO R-TWT response, the primary channel collision info field may be used to carry the first indication information. Furthermore, the primary channel collision info field may include a collision type field and a collision info field. In the DSO R-TWT request, the collision type field may be used to carry interference occupancy rate information, and the collision info field may be used to carry collision type information. In the DSO R-TWT response, the collision type field may be reserved, and the collision info field may be reserved or used to carry the first indication information. Illustratively, the primary channel collision info field may occupy 1 byte, the collision type field may occupy 3 bits within the byte, and then the collision info field may occupy remaining 5 bits.

Furthermore, a DSO R-TWT channel bitmap valid field (i.e., the aforementioned third field or eighth field) may be added to the restricted TWT traffic info field to indicate whether the DSO R-TWT channel bitmap field is valid. Illustratively, the DSO R-TWT channel bitmap valid field may occupy one bit. Illustratively, the DSO R-TWT channel bitmap valid field may be located in a traffic info control field, a subfield of the restricted TWT traffic info field, for example, the B2 reserved bit in the traffic info control field in FIG. 14. Additionally, the channel bitmap valid field may be used to further indicate capability information of the AP or the STA. In the DSO R-TWT response, the channel bitmap valid field may be used to indicate capability information of the AP. In the DSO R-TWT request, the channel bitmap valid field may be used to indicate capability information of the STA. In which, the capability information of the AP may be used to indicate whether the AP has capabilities such as full-channel triggering capability and/or the ability to interact with the STA on a secondary channel during the DSO R-TWT SP negotiated with the STA. The capability information of the STA may be used to indicate whether the STA has the capability to switch to a secondary channel under specific circumstances (such as when the STA detects interference on the primary channel) according to the indication of the AP during the DSO R-TWT SP negotiated with the AP.

Moreover, a primary channel collision info valid field (i.e., the aforementioned fourth field or seventh field) may be added to the restricted TWT traffic info field to indicate whether the primary channel collision info field is valid. Illustratively, the primary channel collision info valid field may occupy one bit. Illustratively, the primary channel collision info valid field may also be located in the traffic info control field of the restricted TWT traffic info field, for example, a B3 reserved bit in the traffic info control field in FIG. 14.

Taking the TWT element shown in FIG. 14 as an example, meanings of the subfields in the aforementioned restricted TWT traffic info field are illustrated. It should be noted that positions and occupied bits of the subfields in the aforementioned restricted TWT traffic info field are not limited; the positions and occupied bits of the aforementioned subfields in FIG. 14 are merely schematic.

The meanings of the DSO R-TWT channel bitmap valid subfield may include the following meanings a) to c). a) If the STA sets this field in the DSO R-TWT request to be 1, it may indicate that the DSO R-TWT channel bitmap field in the DSO R-TWT request is valid; it may further indicate that the STA has the capability to switch to a secondary channel under specific circumstances (for example, when the STA detects interference on the primary channel) according to the indication of the AP during the DSO R-TWT SP negotiated with the AP. b) When the AP receives an R-TWT request from the STA with this field set to be 1 and the AP supports DSP R-TWT operation, if the AP sets this field in the DSO R-TWT response to be 1, it may indicate that the DSO R-TWT channel bitmap field in the DSO R-TWT response is valid, and the AP has capabilities such as full-channel triggering capability and/or the ability to interact with the STA on a secondary channel during the DSO R-TWT SP negotiated with the STA. c) If this field in the DSO R-TWT request/response is set to be 0, it may indicate that the DSO R-TWT channel bitmap field in the DSO R-TWT request/response is invalid, and the STA or AP does not have the aforementioned capabilities when this field is set to be 1.

The meanings of the DSO R-TWT channel bitmap subfield may include the following meanings a) to c). a) This field is valid when the DSO R-TWT channel bitmap valid subfield is set to be 1. The DSO R-TWT channel bitmap valid field has a total of 16 bits each, from high to low, sequentially indicating a 20MHz subchannel or subband, capable of indicating a total of 320MHz channel, with the lowest bit indicating the primary 20MHz channel. b) When the STA sets some bits in this field in the DSO R-TWT request to be 1, it may indicate the subchannels or subbands that the STA expects to use during the DSO R-TWT SP (a sum of subchannels or subbands cannot exceed the maximum bandwidth that the STA supports). If the AP has informed the STA of a channel list via a TWT element in a beacon frame before establishment of the DSO R-TWT, the STA is only allowed to select from the channel list informed by the AP when setting this field. If the STA is a 20MHz-only STA, the STA can set at most one bit of this field to be 1, that is, the STA can have at most one subchannel or subband expected to use during the DSO R-TWT SP. c) When the AP sets some bits in this field in the DSO R-TWT response to be 1, it may indicate the subchannels or subbands that the AP allows the STA to use within the DSO R-TWT SP. If the STA violates relevant rules, the AP may reject the DSO R-TWT request of the STA by setting this field in the DSO R-TWT response to be all zeros. After receiving an R-TWT response with this field set to be all zeros, if the STA still expects to establish a DSO R-TWT with the AP, the STA may retransmit an R-TWT request that complies with relevant rules after receiving the R-TWT response SIFS or after reacquiring a TXOP.

The meanings of the primary channel collision info valid subfield may include meanings a) and b). a) If the STA sets this subfield in the DSO R-TWT request to be 1, it may indicate that the primary channel collision info subfield in the DSO R-TWT request is valid; otherwise, it is invalid. b) If the AP sets this subfield in the DSO R-TWT response to be 1, it may indicate that the primary channel collision info subfield in the DSO R-TWT response is valid; otherwise, it is invalid.

The meanings of the collision type subfield may include meanings a) and b). a) When the STA sets this field in the DSO R-TWT request, this field may be used to indicate a type of collision on the primary channel, where a value 0 may indicate reserved, and a value 1 may indicate OBSS interference. Remaining values of this field are not limited; the collision type corresponding to a specific value depends on specific implementations. For example, a value 2 may indicate Bluetooth interference, etc. b) When the AP sets this field in the DSO R-TWT response, this field may be reserved.

Meanings of the collision info subfield may include meanings a) and b). a) When the STA sets this field in the DSO R-TWT request, this field may be used to indicate the OBSS interference occupancy rate on the primary channel. A greater interference ratio is indicated by a larger value of this field (illustratively, the value of this field may range from 0 to 31; increasing of the value of this field by 1 may indicate an increase in interference ratio by approximately 100/31 =3.226%. The STA may adopt a rounding calculation method when computing statistical information). b) When the AP sets this field in the DSO R-TWT response, this field may be reserved. Alternatively, the AP may set this field in the DSO R-TWT response to indicate a recommendation to the STA regarding channel usage within the DSO R-TWT SP (i.e., the first indication information), serving as a supplement to the first operation parameter. Illustratively, when the AP sets this field, the AP may only use the first two bits (B0 and B1), with the remaining 3 bits reserved. The AP may set the values of the first two bits based on the OBSS interference occupancy rate on the primary channel fed back by the STA. The specific settings depend on the specific implementations and are not limited in this application. Illustratively, when the AP sets the first two bits of this field, their values and meanings may be as shown in Table 1.

**Table 1 Meaning of collision info subfields**

| B0~B1 | Meaning |
|---|---|
| 00 (value is 0) | Reserved. |
| 01 (value is 1) | The STA should preferentially use the primary channel in the corresponding DSO R-TWT SP. The negotiated DSO channel can be used only when the primary channel OBSS interference occurs. |
| 10 (value is 2) | The STA should preferentially use the negotiated DSO channel in the corresponding DSO R-TWT SP. |
| 11 (value is 3) | The STA should preferentially use the negotiated DSO channel in the corresponding DSO R-TWT SP. If the SP switches back to the primary channel, the negotiated DSO channel may also be used in the case of OBSS interference on the primary channel. |

### Option 2: Indicating the first information and/or the second information via the broadcast TWT parameter set field

As another example, the first information and/or the second information may also be indicated via the broadcast TWT parameter set field in the TWT element (i.e., the first element or the second element mentioned earlier) within the R-TWT response/request (i.e., the first message/second message mentioned earlier). In which, the first information may include the first operation parameter and the first indication information, and the second information may include the first feedback information and the second operation parameter.

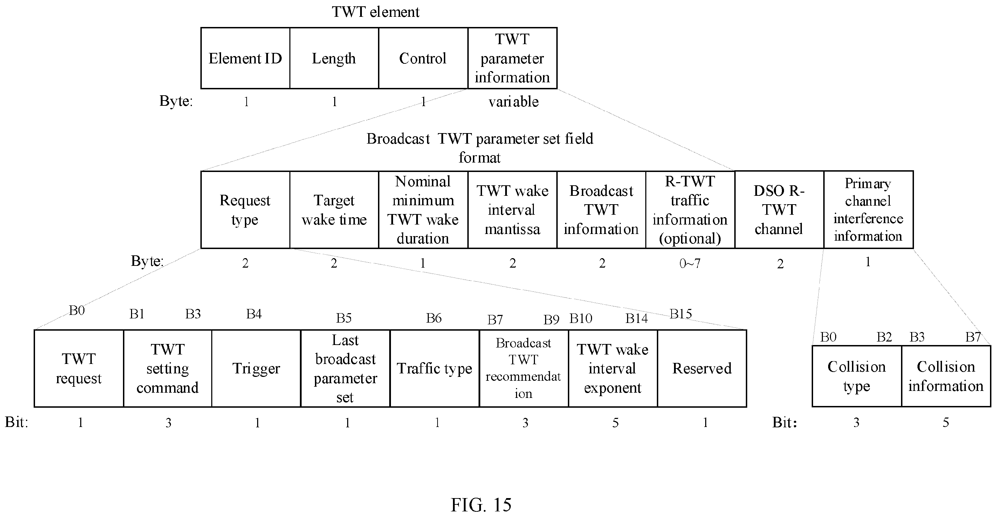

As shown in FIG. 15, a DSO R-TWT channel field (i.e., the first field or the sixth field mentioned earlier) may be added to the broadcast TWT parameter set field to carry the first operation parameter or the second operation parameter. For example, the DSO R-TWT channel field may occupy 2 bytes. The 16 bits of the DSO R-TWT channel bitmap valid field each, from high to low, may sequentially indicate a 20MHz subchannel or subband, capable of indicating a total of 320MHz channel, with the lowest bit indicating the primary 20MHz channel. In the DSO R-TWT response, the DSO R-TWT channel field may be used to carry the first operation parameter. In the DSO R-TWT request, the DSO R-TWT channel field may be used to carry the second operation parameter.

With reference to FIG. 15 again, a primary channel collision info field (i.e., the second field or the fifth field mentioned earlier) may also be added to the broadcast TWT parameter set field to carry the first feedback information (taking interference information on the primary channel as an example, and taking OBSS interference as an example for the interference information on the primary channel) or the first indication information. In the DSO R-TWT request, the primary channel collision info field may be used to carry the first feedback information. In the DSO R-TWT response, the primary channel collision info field may be used to carry the first indication information. Furthermore, the primary channel collision info field may include a collision type field and a collision info field. In the DSO R-TWT request, the collision type field may be used to carry interference occupancy rate information, and the collision info field may be used to carry collision type information. In the DSO R-TWT response, the collision type field may be reserved, and the collision info field may be reserved or used to carry the first indication information. For example, the primary channel collision info field may occupy 1 byte, the collision type field may occupy 3 bits within the byte, and the collision info field may occupy 5 bits within the byte.

Taking the TWT element shown in FIG. 15 as an example, the meanings of the subfields within the aforementioned broadcast TWT parameter set field are illustrated below. It should be noted that positions and occupied bits of the aforementioned subfields within the broadcast TWT parameter set field are not limited; the positions and occupied bits shown in FIG. 15 are merely schematic.

The meaning of the DSO R-TWT channel subfield may include the following meanings a) to c). a) The DSO R-TWT channel field has a total of 16 bits each, from high to low, indicating a 20MHz channel sequentially, capable of indicating a total of 320MHz channel, with the lowest bit indicating the primary 20MHz channel. b) When an STA sets some bits in this field within the DSO R-TWT request to be 1, it may indicate the subchannels or subbands that the STA expects to use during the DSO R-TWT SP (a sum of the subchannels or subbands cannot exceed the maximum bandwidth supported by the STA itself). If the AP has informed the STA of a channel list via the TWT element in a beacon frame before establishment of the DSO R-TWT, the STA is only allowed to select from the channel list informed by the AP when setting this field. If the STA is a 20MHz only STA, the STA can set at most one bit of this field to be 1, that is, the STA can have at most one subchannel or subband expected to use during the DSO R-TWT SP. c) When the AP sets some bits in this field within the DSO R-TWT response to be 1, it may indicate the subchannels or subbands that the AP allows the STA to use within the DSO R-TWT SP. If the STA violates relevant rules, the AP may reject the DSO R-TWT request of the STA by setting this field in the DSO R-TWT response to be all zeros. After receiving an R-TWT response with this field set to be all zeros, if the STA still expects to establish a DSO R-TWT with the AP, the STA may retransmit an R-TWT request that complies with the relevant rules after receiving the R-TWT response SIFS or after reacquiring a TXOP.

The meaning of the collision type subfield may include meaning a) and b). a) When an STA sets this field in the DSO R-TWT request, this field may be used to indicate a collision type on the primary channel, where value 0 may indicate reserved, and value 1 may indicate OBSS interference. Other values of this field are not limited; the collision type corresponding to specific values depends on the implementations. For example, value 2 may indicate Bluetooth interference, etc. b) When the AP sets this field in the DSO R-TWT response, the AP may reserve this field.

The meaning of the collision info subfield may include meanings a) and b). a) When an STA sets this field in the DSO R-TWT request, this field may be used to indicate an OBSS interference occupancy rate on the primary channel. A larger interference ratio is indicated by a larger value of this field (for example, the value of this field may range from 0 to 31; increasing in the value of this field by 1 may indicate an increase in interference ratio by approximately 100/31 = 3.226%. The STA may use a rounding calculation method when computing statistics). b) When the AP sets this field in the DSO R-TWT response, this field may be reserved. Alternatively, the AP may set this field in the DSO R-TWT response to indicate a recommendation to the STA regarding channel usage within the DSO R-TWT SP (i.e., the first indication information), serving as a supplement to the first operation parameter. For example, when the AP sets this field, the AP may only use the first two bits (B0 and B1), with the remaining 3 bits reserved. The AP may set the value of the first two bits based on the OBSS interference occupancy rate on the primary channel fed back by the STA; the specific settings depend on the implementations and are not limited herein. For example, when the AP sets the first two bits of this field, their values and meanings may be as shown in Table 1.

It should be noted that during DSO R-TWT negotiation, the AP may also indicate the first operation parameter to the STA via a PS160 subfield and an RU allocation subfield in the EHT variant user info field. In this case, the AP may reserve the DSO R-TWT channel bitmap subfield in option one, or the AP may reserve the DSO R-TWT channel subfield in option two.

As mentioned earlier, the AP and the STA may also indicate the first information and/or the second information within the DSO R-TWT SP. For example, the STA may feed back the first feedback information to the AP via a CSI frame. For instance, the STA may include information such as the signal to noise ratio (signal to noise ratio, SNR) of the primary channel within a CSI report field of the CSI frame and report the information to the AP, and the CSI report may also feedback many other channel information. For example, the AP may use null data packet announcement and null data packet (null data packet announcement and null data packet, NDPA&NDP) mechanism to request the STA to perform relevant channel measurements. The STA may store measurement results in a CSI frame and transmits the measurement results to the AP as a response to the NDPA&NDP. The AP may also use a regular sounding PPDU to request the STA to transmit a CSI report; the AP only needs to set the CSI/steering subfield in a high-throughput (high-throughput, HT) control field of the sounding PPDU or NDP to be 1, indicating requesting the STA to transmit a CSI report. The function of the CSI/steering subfield is to specify a feedback type of the STA. When collecting CSI reports from multiple STAs, the AP may obtain a comprehensive view of multipath propagation and channel characteristics on the same channel. The AP may analyze and process these CSI reports to infer channel models and characteristics, such as path loss, multipath delay, phase variation, channel fading, etc. Based on the inferred channel model, the AP may perform operations such as beamforming, wireless resource allocation, and interference management. Based on the first feedback information from the STA, the AP may indicate the first operation parameter to the STA via relevant frames.

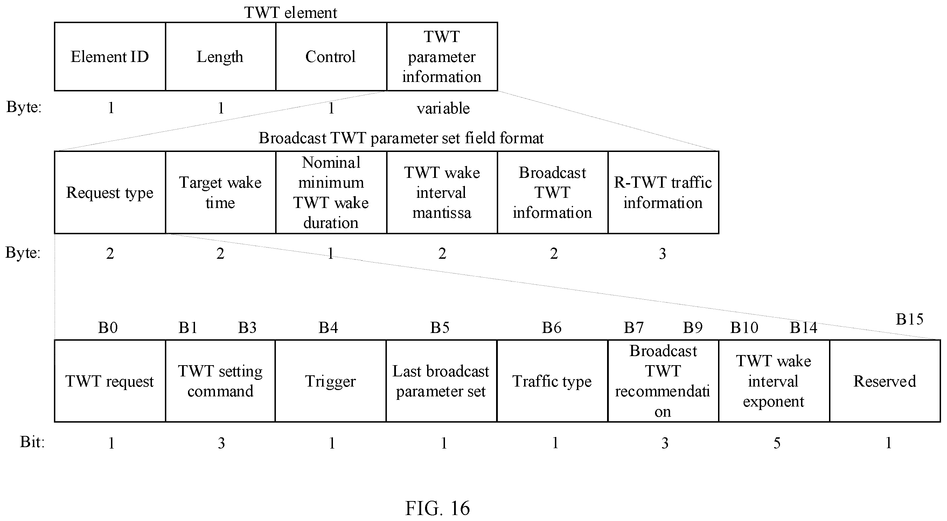

Taking the first predetermined service period being an R-TWT SP as an example, indication manners for the third information or the fourth information are illustrated below in conjunction with FIG. 16. It should be noted that the indication manners of the third information or the fourth information may include multiple different manners, and are not limited to the manners described below.

As mentioned earlier, the AP and STA may indicate the third information or the fourth information during negotiation of the DSO R-TWT. During the negotiation of the DSO R-TWT, the AP and STA may negotiate related content through the exchange of DSO R-TWT request and DSO R-TWT response. Therefore, the third information or the fourth information may be indicated based on the DSO R-TWT request and DSO R-TWT response.

For example, the AP and STA may add a new value to the broadcast TWT recommendation subfield in the TWT element (i.e., the third element or the fourth element mentioned earlier) of the DSO R-TWT request/response (i.e., the third message/fourth message mentioned earlier) to indicate that the current broadcast TWT is a DSO R-TWT. For example, this value may be 5. As shown in FIG. 16, this field is located within a request type subfield of the broadcast TWT parameter information set field of the TWT element. The values of this field and their meanings may be as shown in Table 2.

**Table 2 broadcast TWT recommendation subfield value and meaning**

| Value | Description |
|---|---|
| 0 | There is no limitation on the transmission of the frame in the broadcast TWT SP. |
| 1 | Indicates that the frame transmission of the TWT scheduled STA is limited in the broadcast TWT SP. |
| 2 | Indicates that the frame transmission of the TWT scheduled STA is limited in the broadcast TWT SP. |
| 3 | Indicates that transmission of the frame is not limited in the broadcast TWT SP, except that the non-AP transmits, at the start of the TWT SP, a TIM frame or a fast initial link setup (fast initial link setup, FILS) discovery frame that includes a traffic indication map (traffic indication map, TIM) element |
| 4 | Indicates that the current broadcast TWT is a R-TWT. |
| 5 | Indicates that the current broadcast TWT is a DSO R-TWT. |
| 6-7 | Reserved |

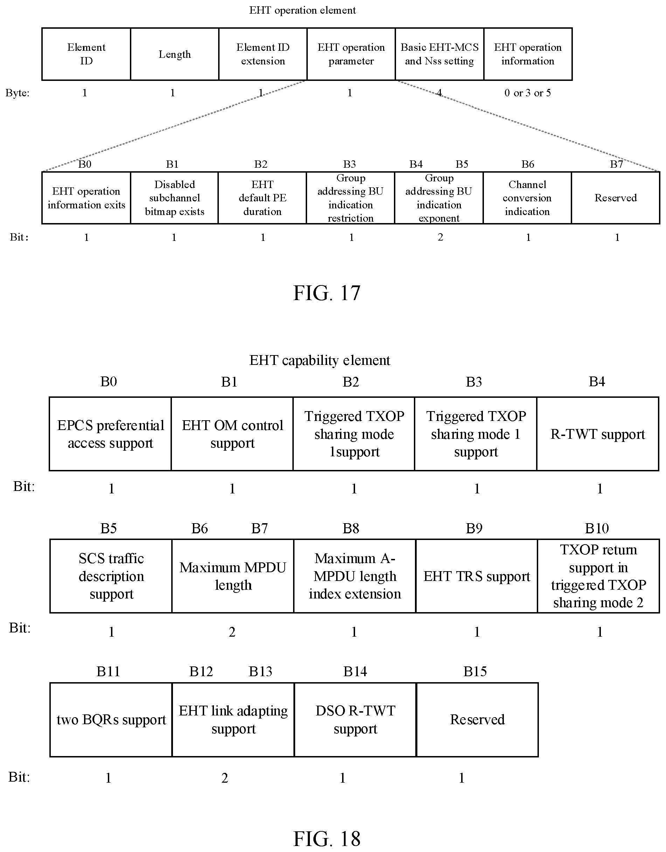

Taking the first predetermined service period being an R-TWT SP as an example, the indication of the fifth information is illustrated below in conjunction with FIG. 17. It should be noted that indicating manners of the fifth information may include multiple different manners, and are not limited to the manner described below.

For example, the AP may indicate the fifth information via the EHT operation element (i.e., the fifth element mentioned earlier). As shown in FIG. 17, the AP may modify B6 of the EHT operation element into a channel switching indication subfield, used to indicate whether the STA may switch back to the primary channel after the DSO sequence ends within its corresponding DSO R-TWT SP. Furthermore, the EHT operation element may be included in the R-TWT response (i.e., the fifth message mentioned earlier) for indication, or may be included in a beacon frame (i.e., the fifth message mentioned earlier) for indication after the DSO R-TWT is established.

The meaning of the channel switching indication subfield may include meanings a) and b). a) When this field is set to 0 by the AP, it may indicate that if the STA switches to the negotiated secondary channel due to primary channel OBSS interference within the DSO R-TWT SP and successfully initiates a DSO frame exchange sequence (i.e., the frame exchange sequence within the DSO R-TWT SP) with the AP, after the DSO frame exchange sequence ends, the STA may stay on the secondary channel and maintains a listening mode for the remaining time within this SP. b) When this field is set to 1 by the AP, it may indicate that if the STA switches to the negotiated secondary channel due to primary channel OBSS interference within the DSO R-TWT SP and successfully initiates a DSO frame exchange sequence with the AP, after the DSO frame exchange sequence ends, if the STA expects to return to the primary channel, the STA may indicate this expectation in the last frame transmitted before the end of the DSO frame exchange sequence, or the STA may contend for a TXOP on the secondary channel to transmit a frame to the AP for indication, including relevant information for channel switching such as its own switching delay. After switching back to the primary channel, the STA may perform CCA on the primary channel to obtain the primary channel status.

Taking the first predetermined service period being an R-TWT SP as an example, the indication of the sixth information and the seventh information is illustrated below in conjunction with FIG. 18. It should be noted that indicating manners of the sixth information and the seventh information may include multiple different manners, and are not limited to the manners described below.

When using the DSO R-TWT mechanism, the AP and STA may indicate their support for DSO R-TWT capability. For example, the AP side may indicate via a beacon frame, and the STA side may indicate via an association request frame or a probe request frame. As shown in FIG. 18, the AP and STA may modify the reserved bit B14 of the EHT MAC capabilities information field in the EHT capabilities element (i.e., the sixth element or the seventh element mentioned earlier) within the corresponding frame into a DSO restricted TWT support field. The DSO restricted TWT support subfield may be used to indicate DSO R-TWT capability. For example, if an AP or STA has DSO R-TWT capability, the AP or STA may set the value of this subfield to be 1 to indicate support for the DSO R-TWT operation; otherwise, the value of this subfield is set to be 0.

It should be noted that in some implementations, the STA and AP may not change the exchange of capability information when the STA joins the BSS of the AP. That is, the AP may not indicate the fourth information and the sixth information to the STA, and the STA may not indicate the third information and the seventh information to the AP. In the above examples, the STA and AP may not modify the reserved bits of the EHT MAC capabilities element, nor modify the value of the broadcast TWT recommendation field. In this case, the STA and AP may declare their respective capability information and so on during DSO R-TWT establishment. For example, during DSO R-TWT negotiation, while indicating the first information and/or the second information using the restricted TWT traffic info field in option one or the broadcast TWT parameter set field in option two, the STA and AP may indicate their support for the DSO R-TWT operation by setting the DSO R-TWT channel bitmap valid subfield to be 1 or setting the DSO R-TWT channel field to be non-zero.

It should be noted that in some implementations, when the indication manner of the first information and the second information adopts option two described above, and the STA and AP modify the value of the broadcast TWT recommendation field to indicate the third information or the fourth information, while modifying the reserved bits of the EHT MAC capabilities element into the DSO restricted TWT support subfield to indicate the sixth information or the seventh information, the DSO restricted TWT support subfield and the broadcast TWT recommendation field may also be used to indicate whether the DSO R-TWT channel field and the primary channel collision info field in the TWT element are valid. For example, when the DSO restricted TWT support field in the EHT capabilities element is set to be 1 and the value of broadcast TWT recommendation is set to be 5, the corresponding DSO R-TWT channel field and primary channel collision info field in the TWT element are valid; otherwise, they are reserved.

### Rules for DSO R-TWT

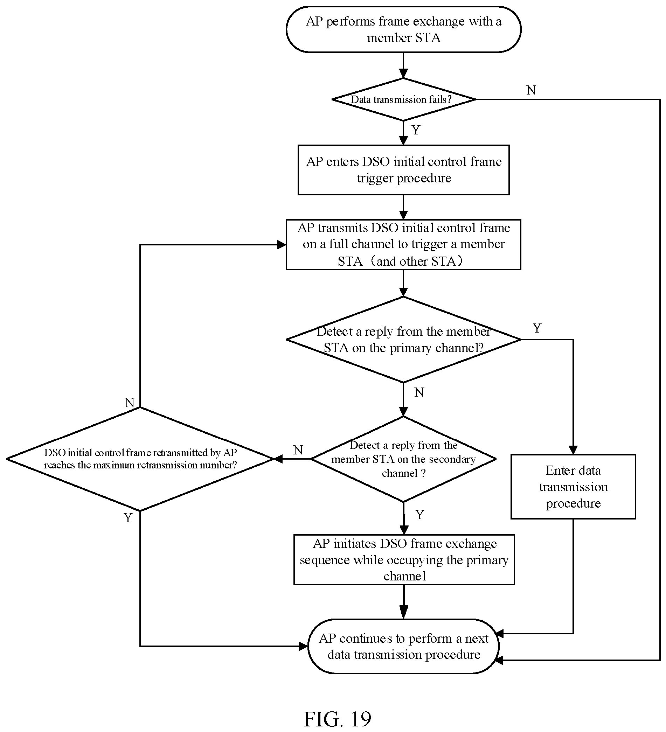

The rules for DSO R-TWT are illustrated below with reference to FIGs. 19 to 20. It should be noted that the rules for DSO R-TWT may include one or more of the following rules, and may also include rules different from the following rules.

An EHT STA and an EHT AP supporting the DSO R-TWT operation shall set the DSO restricted TWT support subfield in the transmitted EHT capabilities element to be 1, and shall set the broadcast TWT support subfield in the transmitted HE capabilities element to be 1; otherwise, the EHT STA shall set the DSO restricted TWT support subfield in the transmitted EHT capabilities element to be 0.

A DSO R-TWT AP is an EHT AP that sets the DSO restricted TWT support subfield in the transmitted EHT capabilities element to be 1.

A DSO R-TWT STA is an EHT STA that sets the DSO restricted TWT support subfield in the transmitted EHT capabilities element to be 1, and transmits to or receives from a DSO R-TWT AP a broadcast TWT element carrying one or more restricted TWT parameter set fields.

A DSO R-TWT STA establishes one or more DSO R-TWTs with its associated EHT AP by following the rules defined for broadcast TWT in existing rules and the additional rules and restrictions defined in the following subclauses. An EHT STA supporting the DSO R-TWT operation follows the rules defined for broadcast TWT in existing rules and the additional rules and restrictions defined in the following subclauses.

The establishment of DSO R-TWT membership uses the same procedure as that described in existing rules for establishing R-TWT membership.

A DSO R-TWT AP shall set a trigger field in the transmitted restricted TWT parameter set field to be 1.

When a restricted TWT parameter set field is included in an individually addressed management frame transmitted by a DSO R-TWT AP or a DSO R-TWT STA for DSO R-TWT membership setup, the restricted TWT traffic info present subfield of the broadcast TWT info field included in the restricted TWT parameter set field shall be set to be 1.

A DSO R-TWT AP and a DSO R-TWT STA shall also set the restricted TWT traffic info field. In addition to indicating the TID of latency-sensitive traffic as in R-TWT in existing rules, if channel indication is needed, they shall set the DSO R-TWT channel bitmap valid in the traffic info control field located in the restricted TWT traffic info field to be 1, and indicate the channels allowed for use within the DSO R-TWT SP by setting the DSO R-TWT channel bitmap in the restricted TWT traffic info field.

### Establishment Procedure for DSO R-TWT

The establishment procedure for DSO R-TWT is illustrated below with reference to figures. It should be noted that the establishment procedure for DSO R-TWT may include one or more of the following rules, and may also include rules different from the following rules.

If a STA expects to apply to join a certain DSO R-TWT of an AP, the STA may transmit an R-TWT request to the AP. The TWT element included may carry its own capability information, channel information, etc. The specific field settings are as follows.

The STA may indicate that the requested broadcast TWT is a DSO R-TWT by setting the broadcast TWT recommendation subfield in the TWT element to be 5; may set the DSO R-TWT channel bitmap valid subfield in the TWT element to be 1, to indicate that the DSO R-TWT channel bitmap field is valid, and that the STA has the capability to switch to a secondary channel under specific conditions (e.g., when interference is detected by the STA on the primary channel) during the subsequent DSO R-TWT SP assigned by the AP; and may also set the DSO R-TWT channel bitmap field to indicate a channel expected to use if OBSS interference is detected on its own primary channel during the subsequent DSO R-TWT SP assigned by the AP. It should be noted that the STA may select a request for changing operating parameters (mainly being related parameters for channel switching mode) based on statistical information of the detected OBSS interference occupancy rate on the primary channel during previously joined other DSO R-TWT SPs or subsequent DSO R-TWT SPs, so that the AP can schedule the STA in a more appropriate manner. The manners for changing operating parameters include the following two manners.

a) The STA may re-apply to the AP for a DSO R-TWT to specify new operating parameters; b) The STA may directly carry some additional indication information for parameter changing in frames transmitted within the SP. For the manner a), the STA may include this statistical information in the primary channel collision info field within the R-TWT request; for the manner b), the STA may include this statistical information in frames such as data frames/response frames.

After receiving the R-TWT request with the TWT element transmitted by the STA, the AP may transmit an R-TWT response in response to the request of the STA to indicate its own capability, the operating mode to be used during the DSO R-TWT SP, approval of the request from the STA for available channels, etc. The specific field settings are as follows.

The AP may indicate agreement to a group joining application from the STA by setting the broadcast TWT recommendation subfield in the TWT element to be 5; the AP may set the DSO R-TWT channel bitmap valid subfield in the TWT element to be 1, to indicate that the DSO R-TWT channel bitmap field is valid, and that the AP has the capability for full-channel triggering during the DSO R-TWT SP negotiated with the STA, the capability to interact with the STA on secondary channels, etc.; and may also set the DSO R-TWT channel bitmap field to indicate a channel that the STA may use during the subsequent DSO R-TWT SP. Furthermore, if the frame received by the AP contains the aforementioned status feedback information from the STA (e.g., OBSS interference occupancy rate on the primary channel within a period of time), indicating that the STA needs to change operating parameters, the AP may set the values of the DSO R-TWT channel bitmap and primary channel collision info fields based on the occupancy rate. The former field is used to indicate the new DSO channel, and the latter field is used to provide an enhanced indication for channel usage within the SP. If the occupancy rate is high, the value of the primary channel collision info field is set to be 2 or 3; otherwise, the value of this field is set to be 1.

Through the interaction of R-TWT req./resp. with the AP, the STA successfully joins a DSO R-TWT of the AP and becomes a member STA of the AP.

### Rules for AP in DSO R-TWT

The rules for the AP in DSO R-TWT are illustrated below. It should be noted that the rules for the AP in DSO R-TWT may include one or more of the following rules, and may also include rules different from the following rules.

When the AP operates in DSO R-TWT mode and the STA supports DSO R-TWT mode, the rules followed by the AP may be exemplified as follows.
a) The DSO initial control frame may be (MU-)RTS or BSRP.

If the DSO initial control frame is (MU-)RTS, after entering the error recovery procedure within the DSO R-TWT SP, the AP should trigger multiple STAs sequentially, and preferentially triggers the currently operating member STA (STA that has negotiated DSO R-TWT with AP1 and for which this SP is its corresponding SP);
if the DSO initial control frame is BSRP, after entering the error recovery procedure within the DSO R-TWT SP, the AP may trigger multiple STAs simultaneously;
if there are multiple STAs to be triggered, the relevant STA is indicated in a User Info field of the DSO initial control frame.

b) If the AP receives an R-TWT request or other frames with feedback information, the AP may, based on the OBSS interference occupancy rate on the primary channel of the STA and other interference situations in a period of time fed back by the STA, indicate the DSO channel that the STA should use during the DSO R-TWT SP and related recommendations for channel usage, in the R-TWT response or other response frames. For example, if the AP sets the collision info subfield of the primary channel collision info field, the STA should use the channel preferentially according to the indication of this parameter.

c) Within the DSO R-TWT SP, if the AP does not receive a reply from the currently operating STA after SIFS following transmitting a frame to the STA, the AP may transmit a DSO initial control frame on full channels after a point coordination function inter-frame space (PIFS), with the following restrictions.

This DSO initial control frame cannot be a broadcast data frame or broadcast management frame. The DSO initial control frame should be in non-HT PPDU or non-HT duplicate PPDU format, and a transmission rate should be 6 Mb/s, 12 Mb/s, or 24 Mb/s;
the DSO initial control frame may be an MU-RTS or BSRP trigger frame;
the transmission channel of the DSO initial control frame may include the current primary channel and the expected negotiated secondary channel.

d) After transmitting the DSO initial control frame, the AP may detect the response of the currently operating STA on a full channel. The detection method is as follows. The AP has the capability for full-channel listening and adopts a sequential triggering procedure. That is, when failing to receive a response from an OBSS STA, the AP may preferentially trigger this OBSS STA on the full channel, and then may trigger other member STAs on the primary channel. Therefore, as long as the AP receives a CTS, it indicates that the signal of the currently operating STA has been detected. The detected signal may have the following three situations.

If the AP detects the signal of the currently operating STA on the primary channel, the AP may enter an error recovery procedure of existing rules, i.e., after receiving the response of the STA, the AP retransmits the PPDU after SIFS, and the current PPDU transmission ends after error recovery is completed;
if the AP detects the signal of the currently operating STA on a secondary channel, the AP may consider that the current STA has switched its operating channel to a corresponding secondary channel. The subsequent frame exchange procedure between the AP and the currently operating STA will be performed on that secondary channel;
if the AP fails to detect the signal of the currently operating STA on both the primary channel and the secondary channel, the AP may retransmit the DSO initial control frame to continue detecting the currently operating STA, until the signal of the currently operating STA is detected or a maximum retransmission count is reached.

e) If the AP confirms that the STA has switched to a secondary channel and conducts a DSO frame exchange sequence with the AP on the secondary channel, the AP needs to occupy the primary channel during the subsequent DSO frame exchange sequence. Examples are as follows.

The AP may transmit redundant data frames for the secondary channel on the primary channel;
the AP may schedule other STAs onto the primary channel.
f) After the AP and the STA enter the DSO frame exchange sequence, if the AP fails to receive a reply from the STA after SIFS following the transmission of a frame that requires a reply, and expects to continue executing the frame exchange sequence with the STA, the AP may retransmit a DSO initial control frame to the STA before the transmission network allocation vector (TXNAV) timer expires.
g) If the current DSO frame exchange sequence ends and the AP has no special indication, the STA continues to operate on the secondary channel by default.

The procedure for the AP to initiate a DSO exchange sequence may be as shown in FIG. 19.

### Rules for STA in DSO R-TWT

The rules for the STA in DSO R-TWT are illustrated below. It should be noted that the rules for the STA in DSO R-TWT may include one or more of the following rules, and may also include rules different from the following rules.

When the STA operates in a DSO R-TWT mode and the AP supports the DSO R-TWT mode, the rules followed by the STA may be exemplified as follows.
a) The STA may negotiate changes to operating parameters with the AP. For example, if the STA expects to change the channel used during the DSO R-TWT SP due to primary channel OBSS occupancy rate, the STA may choose from the following two manners: 1. The STA may re-establish a new DSO R-TWT with the AP. Specifically, the STA may indicate the OBSS interference occupancy rate on its primary channel over a period of time, in the R-TWT request. The AP adjusts the channel that the STA should use during the DSO R-TWT SP by indicating the DSO channel in the R-TWT response based on this feedback information. 2. The STA may perform parameter update within the DSO R-TWT SP. Specifically, the STA may provide feedback in frames such as a CSI frame or add feedback information to frames such as R-TWT response, PPDU, or BA. The AP will provide relevant indications/responses to the STA based on the feedback information.
b) Optionally, if the STA receives an R-TWT response that the value of the collision info subfield of the primary channel collision info field in the TWT element is set to be 2 or 3, the STA should preferentially use the negotiated DSO channel within the corresponding DSO R-TWT SP. The STA may communicate with the AP on the negotiated channel within the corresponding SP. If the STA receives an R-TWT response that the value of the collision info subfield of the primary channel collision info field in the TWT element is set to be 1, the STA should preferentially use the primary channel to communicate with the AP (this rule also applies when the field value is set to be 3). If the STA cannot use the primary channel due to OBSS interference on the primary channel during the SP, the STA should use the DSO channel negotiated with the AP to perform DSO operations with the AP, during the DSO R-TWT SP.
c) Before the SP starts or when waiting to receive data within the SP, the STA may switch its operating channel to a secondary channel. After switching to the secondary channel, the STA may enter a listening mode. The listening mode includes CCA detection and waiting to receive the DSO initial control frame transmitted by the AP, and staying on the secondary channel for the remaining SP time.
d) The STA receives the DSO initial control frame transmitted by the AP on the secondary channel to confirm initiation of the frame exchange sequence on the secondary channel within the DSO R-TWT SP. This DSO initial control frame cannot be a broadcast data frame or a broadcast management frame, and may have the following requirements.

The DSO initial control frame may be in non-HT PPDU or non-HT duplicate PPDU format, and the transmission rate should be 6 Mb/s, 12 Mb/s, or 24 Mb/s.

The DSO initial control frame may be an MU-RTS or BSRP trigger frame. When the STA receives an MU-RTS trigger frame or BSRP trigger frame on the secondary channel, the STA should reply to the AP on the secondary channel according to existing rules. A transmit spatial stream of the response frame to the BSRP trigger frame may be limited to one spatial stream, with relevant description indicated in the BSRP trigger frame.

e) After receiving the DSO initial control frame and replying with a response frame, the STA may perform data transmission and reception on the secondary channel based on its own spatial stream capability, available bandwidth, and operating mode. Relevant information may be indicated during DSO R-TWT negotiation through an operating mode field of the operating mode notification element or the EHT OM control subfield of the HT control field. During the DSO data frame exchange, the AP will not communicate with the STA on the original primary channel.

f) During the DSO data frame exchange, if any of the following situations occur, the STA will return to the listening mode on the secondary channel, and it is considered that the current frame exchange sequence ends.

If the STA receives a DSO initial control frame but fails to receive the PHY-RXSTART.indication primitive after aSIFSTime + aSlotTime + aRxPHYStartDelay, where aRxPHYStartDelay is 20 microseconds. A starting instant of this time is after the STA transmits the response for PPDUs requiring a response, and after the STA receives the PPDU for PPDUs not requiring a response.

If the STA receives a DSO initial control frame and receives the PHY-RXSTART.indication primitive after aSIFSTime + aSlotTime + aRxPHYStartDelay, where aRxPHYStartDelay is 20 microseconds. A starting instant of this time is after the STA transmits the response for PPDUs requiring a response, and after the STA receives the PPDU for PPDUs not requiring a response. The PPDU corresponding to PHY-RXSTART.indication may contain any of the following frames.
1. An individually addressed frame with the RA being the MAC address of this STA.
2. A trigger frame addressed to this STA and containing a user info field.
3. A CTS-to-self frame with the RA being the MAC address of the AP to which this STA belongs.
4. A Multi-STA BlockAck frame addressed to this STA and containing a Per AID TID info field.
5. An NDP announcement frame and sounding NDP addressed to this STA and containing a STA info field.

If the STA receives a DSO initial control frame but does not respond to the most recent frame that requires a response after SIFS.

g) The STA only performs the DSO frame exchange sequence with the AP on the secondary channel negotiated during establishment of the DSO R-TWT. When switching to the secondary channel, the STA cannot actively initiate frame transmission.

h) According to indications during negotiation or from the beacon frame, the STA may choose from the following two operating modes after the DSO frame exchange sequence ends: 1. the STA may stay on the secondary channel and maintains a listening mode; 2. the STA may switch back to the primary channel. Before switching, it needs to notify the AP. The switching process may need to consider switching delay. After switching, it needs to perform CCA on the primary channel to obtain the primary channel status.

i) After the DSO R-TWT SP ends, if the STA stays on the secondary channel, the STA may choose whether to switch back to the primary channel based on its own needs. If needed, the STA may indicate its intention to switch back to the primary channel in the last frame which the STA transmits within the SP. After switching back to the primary channel, the STA needs to perform CCA on the primary channel to obtain the primary channel status. In this scenario, switching delay is unnecessary to be considered.

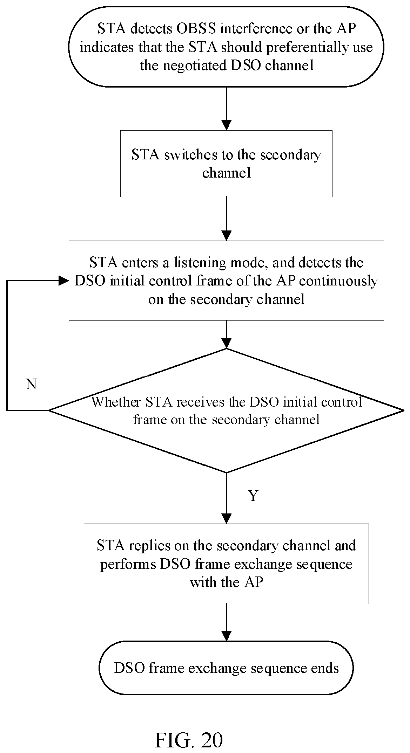

The workflow for the STA entering the DSO frame exchange sequence may be shown in FIG. 20. For the detailed process of the frame exchange sequence after the STA switches to the secondary channel, one may refer to rule description and embodiments of the STA.

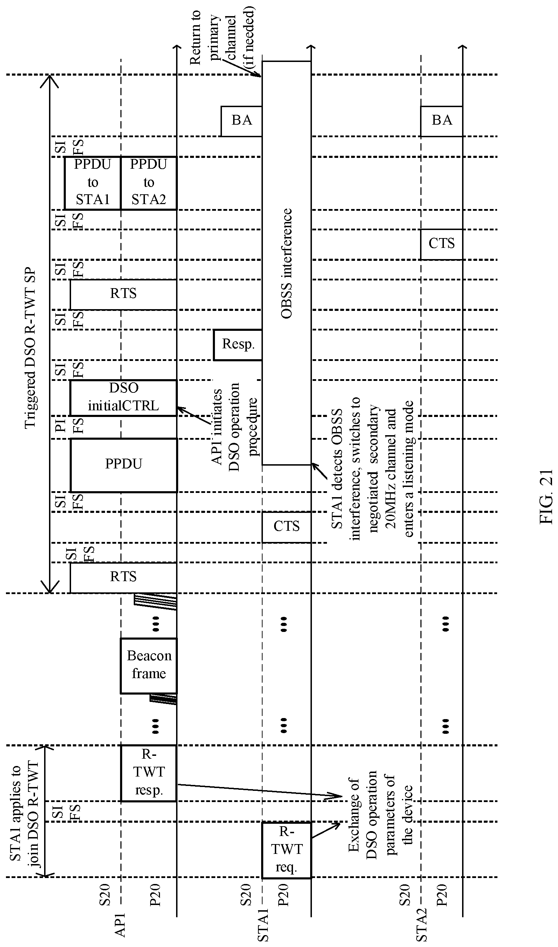

A wireless communication method in embodiments of this application is described below in conjunction with FIGs. 21 to 39. For example, the R-TWT using the wireless communication method in the embodiments of this application may be called DSO R-TWT. The subchannel or subband usable by the STA within the DSO R-TWT may be called the DSO channel. The initial control frame transmitted by the AP within the DSO R-TWT may be called the DSO initial control frame. The exchange sequence between the AP and the STA within the DSO R-TWT may be called the DSO (frame) exchange sequence. The first operation parameter mentioned earlier may be called the DSO operation parameter. The data retransmission mechanism mentioned earlier may be called the DSO operation procedure. In FIGs. 21 to 39, taking trigger-enabled R-TWT as an example, taking P20 as an example of the primary channel, taking S20 as an example of the secondary channel, and the AP1 can schedule STA1 and STA2.

In Embodiment 1 to Embodiment 17 below, when negotiating the DSO channel during the DSO R-TWT negotiation, the AP side does not use the primary channel collision info field of the TWT element. In this case, the AP may retain the primary channel collision info field and indicate the negotiated DSO channel only through the DSO R-TWT channel bitmap field or the PS160 subfield and RU allocation subfield of the EHT variant user info field. The STA may only use the DSO channel negotiated through these fields. Among them, the DSO R-TWT SP in Embodiment 1 to Embodiment 11 takes downlink transmission as an example, while the DSO R-TWT SP in Embodiment 12 to Embodiment 17 takes uplink transmission as an example.

### Embodiment 1

As shown in FIG. 21, in Embodiment 1, STA1 may apply to join DSO R-TWT of AP1 and perform R-TWT req./resp. interaction with the AP1. In the R-TWT req./resp., the STA1 and the AP1 may exchange DSO operation parameters within the DSO R-TWT (e.g., negotiate the DSO channel). Initially, the AP1 only schedules the STA1 (possibly because the STA1 has a higher priority) for transmission on the primary channel. After the AP1 transmits a PPDU to the STA1 and fails to receive a BA from the STA1, for this situation of not receiving a BA from any STA, the AP1 enters a special error recovery mode, i.e., retriggering the STA after PIFS. Here, the triggering manner is modified to transmitting a DSO initial control frame (e.g., (MU-)RTS frame) on the full channel (the channel list negotiated previously) and only triggering the STA1. After the AP1 receives the response from the STA1, the AP1 triggers other STAs (e.g., STA2), then retransmits the PPDU to the STA1 on the DSO channel determined by previous negotiation, and transmits a PPDU to STA2 on the primary channel. After the SP ends, the STA1 decides whether to return to the primary channel based on its own needs.

### Embodiment 2

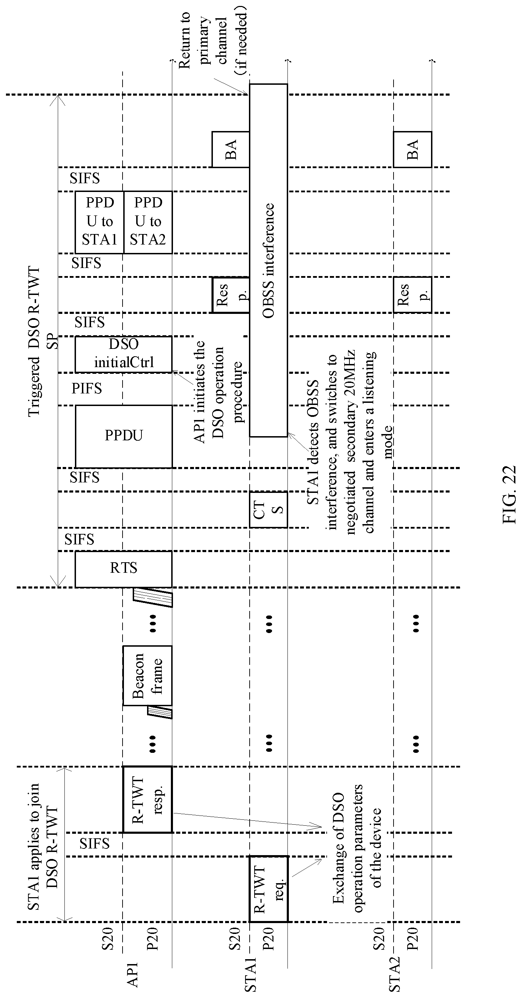

As shown in FIG. 22, Embodiment 2 is similar to Embodiment 1, with the difference that the DSO initial control frame in Embodiment 2 is implemented using BSRP. After data transmission of the AP1 fails, the AP1 may simultaneously trigger STA1 and STA2 through the DSO initial control frame, then interacts with the STA1 and the STA2 on the DSO channel negotiated previously and the primary channel respectively. After the SP ends, the STA1 may decide whether to return to the primary channel based on its own needs.

### Embodiment 3

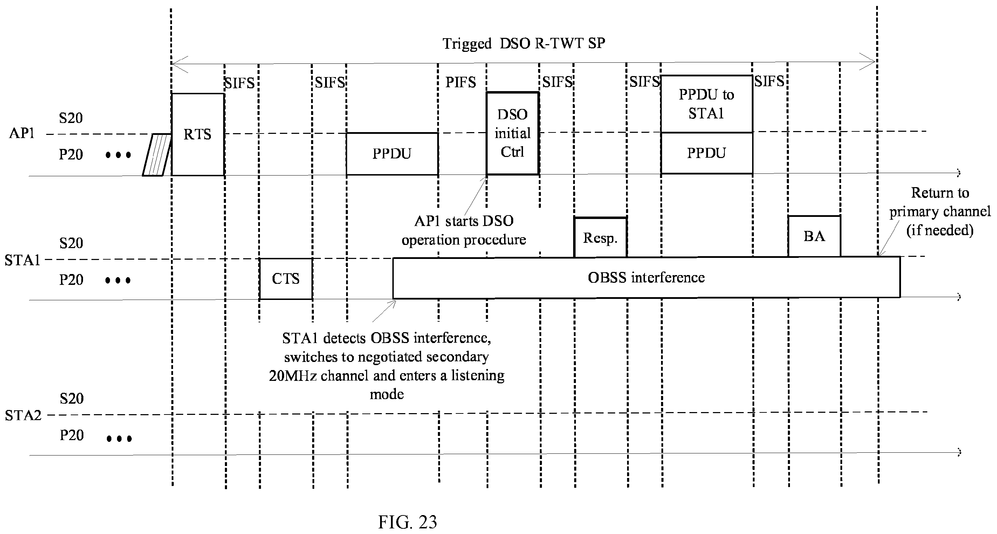

In Embodiment 3, the previous negotiation process of DSO R-TWT may be the same as that of Embodiment 1 shown in FIG. 21, and the SP of DSO R-TWT may be as shown in FIG. 23. Referring to FIG. 23, within the DSO R-TWT SP, the error recovery mode when the AP1 fails to receive a BA from any STA is similar to Embodiment 1, with the difference that the AP1 may not have data to be transmitted to other member STAs. Therefore, in FIG. 23, the AP1 may only trigger the STA1 through the DSO initial control frame during error recovery. After the AP1 receives the response from the STA1, the AP1 may retransmit the PPDU on the DSO channel determined by previous negotiation and transmit a redundant PPDU on the primary channel to occupy the primary channel, to prevent other member STAs from preempting the primary channel and causing interference to transmission of the STA1. After the SP ends, the STA1 may decide whether to return to the primary channel based on its own needs.

### Embodiment 4

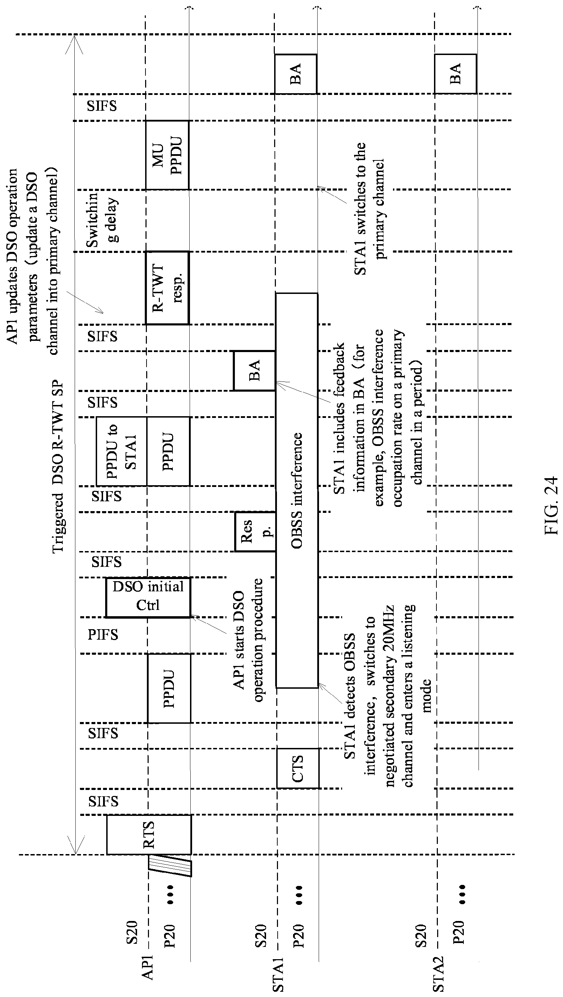

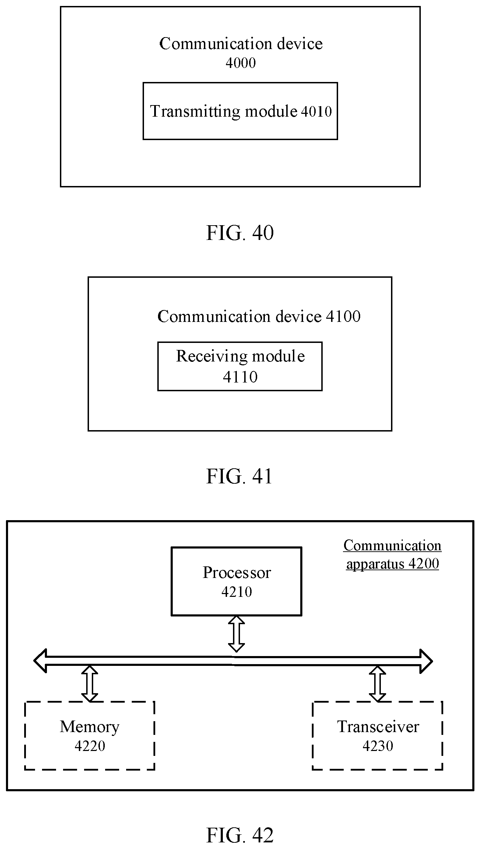

In Embodiment 4, the previous negotiation process of DSO R-TWT may be the same as that of Embodiment 1 shown in FIG. 21, and the SP of DSO R-TWT may be as shown in FIG. 24. Referring to FIG. 42, within the DSO R-TWT SP, the STA1 may include some feedback information (e.g., OBSS interference occupancy rate on the primary channel over a period of time) in a BA transmitted during the DSO exchange sequence. After receiving the feedback information, the AP1 transmits an R-TWT response to the STA1 to update the DSO operation parameters with the STA1 (e.g., as shown in FIG. 24, updating the DSO channel to the primary channel). The AP1 may wait for a period of time (the switching delay of the STA1 negotiated previously), then interact with the STA1 on the new DSO channel, while also interacts with other member STAs on the primary channel. It should be noted that the switching delay of the STA1 may be long. During the switching delay, the AP1 may provide services to other member STAs or perform padding while waiting for the STA1 to complete switching.

### Embodiment 5

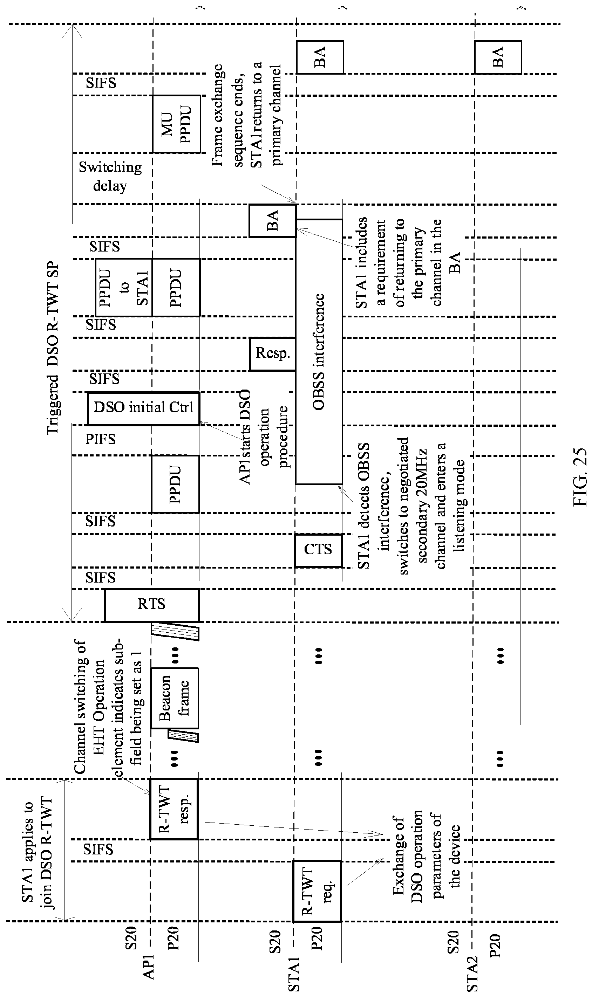

As shown in FIG. 25, in Embodiment 5, based on the scenario where the STA1 switches back to the primary channel after the DSO frame exchange sequence ends in Embodiment 3, during the previous negotiation process of DSO R-TWT, the AP1 may set the channel switching indication subfield of the EHT operation element to be 1 in the R-TWT response, indicating that the STA1 may switch back to the primary channel after the DSO frame exchange sequence ends. In Embodiment 5, the first half of the DSO R-TWT SP is the same as that in Embodiment 3. After the DSO frame exchange sequence ends, the STA1 may expect to switch back to the primary channel because the STA1 predicts that OBSS interference may end based on statistical information from a previous SP or due to other reasons. Then, the STA1 may indicate this requirement in the BA and feed back relevant information about channel switching such as its own switching delay. Then, the STA1 may obtain the primary channel status by performing CCA on the primary channel. The AP1 may interact with the STA1 and the STA2 on the primary channel after switching delay + SIFS.

### Embodiment 6

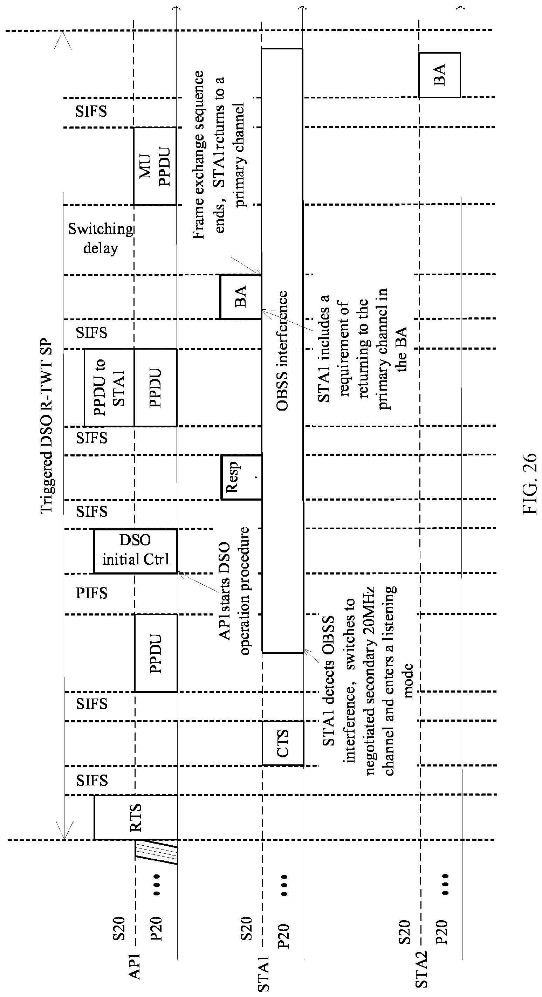

In Embodiment 6, the previous negotiation process of DSO R-TWT may be the same as that of Embodiment 5 shown in FIG. 25, and the DSO R-TWT SP process may be as shown in FIG. 26. Referring to FIG. 26, Embodiment 6 is similar to the DSO R-TWT SP scenario of Embodiment 5, with the difference that in Embodiment 6, the STA1 may fail to predict an end time of OBSS interference on the primary channel or the prediction has a deviation. Therefore, after the DSO frame exchange sequence ends and the STA1 returns to the primary channel, OBSS interference on the primary channel still exists, and the STA1 cannot use the primary channel. In this case, the AP1 cannot receive a BA from the STA1 and may retransmit a DSO initial control frame for error recovery. For the error recovery procedure adopted by the AP1, one may refer to Embodiment 1 and Embodiment 3.

### Embodiment 7

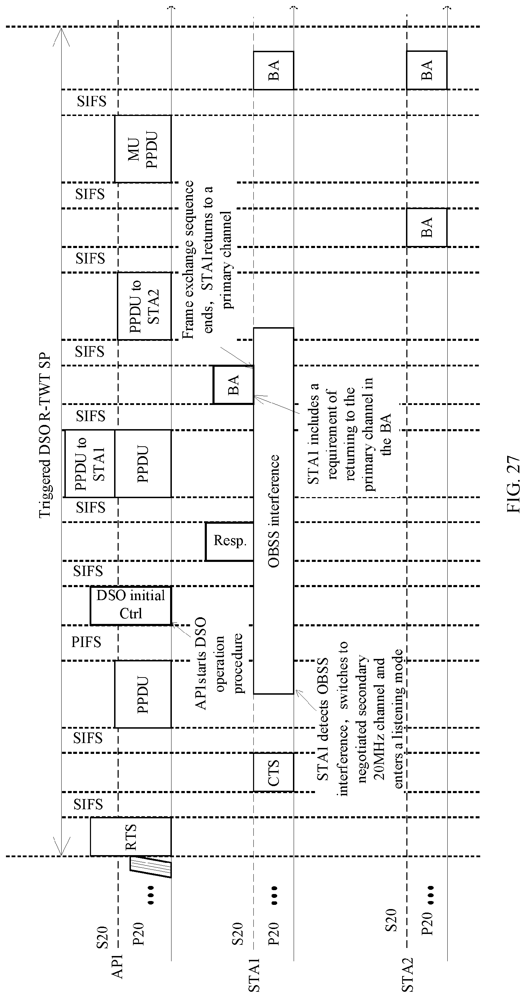

In Embodiment 7, the previous negotiation process of DSO R-TWT may be the same as that of Embodiment 5 shown in FIG. 25, and the DSO R-TWT SP process may be as shown in FIG. 27. Referring to FIG. 27, Embodiment 7 is similar to the DSO R-TWT SP scenario of Embodiment 5, with the difference that in Embodiment 7, after the DSO frame exchange sequence ends, the AP1 has no data to be transmitted to the STA1. Then the AP1 may first interact with other STAs, and then interact with the STA1 on the primary channel when there is data to be transmitted to the STA1. In this case, the AP1 does not need to consider the switching delay of the STA1and directly interacts with the STA2 after SIFS since receiving the BA of the STA1.

### Embodiment 8

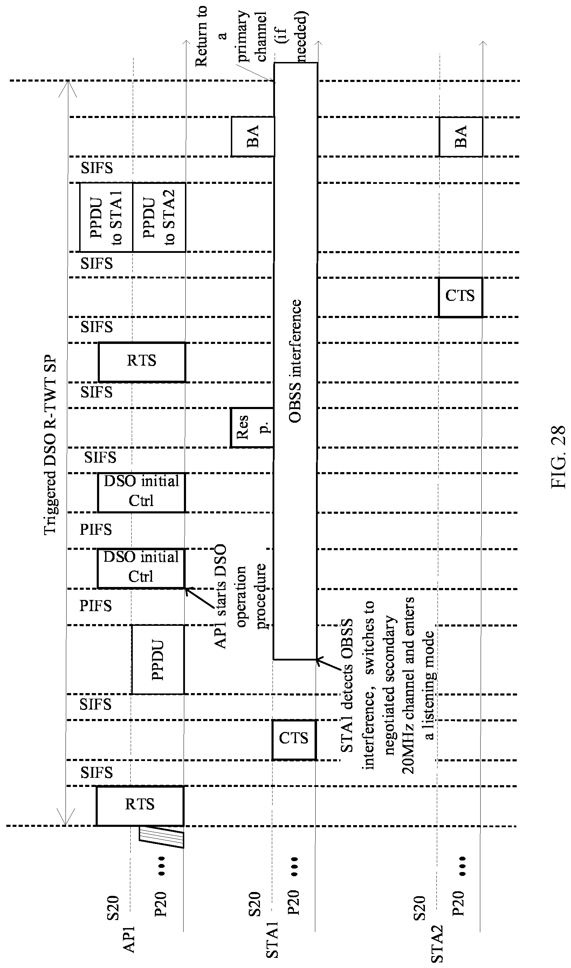

In Embodiment 8, the previous negotiation process of DSO R-TWT may be the same as that of Embodiment 1 shown in FIG. 21, and the DSO R-TWT SP process may be as shown in FIG. 28. Referring to FIG. 28, Embodiment 8 is similar to the DSO R-TWT SP scenario of Embodiment 1, with the difference that after the AP1 transmits the DSO initial control frame ((MU-)RTS frame) on the full channel (the channel list negotiated previously), the STA1 may not have completed channel switching and thus cannot respond to the AP1. Then, the AP1 may retransmit the DSO initial control frame after PIFS. After receiving the response from the STA1 on the DSO secondary channel determined by previous negotiation, the subsequent process is the same as that in Embodiment 1.

### Embodiment 9

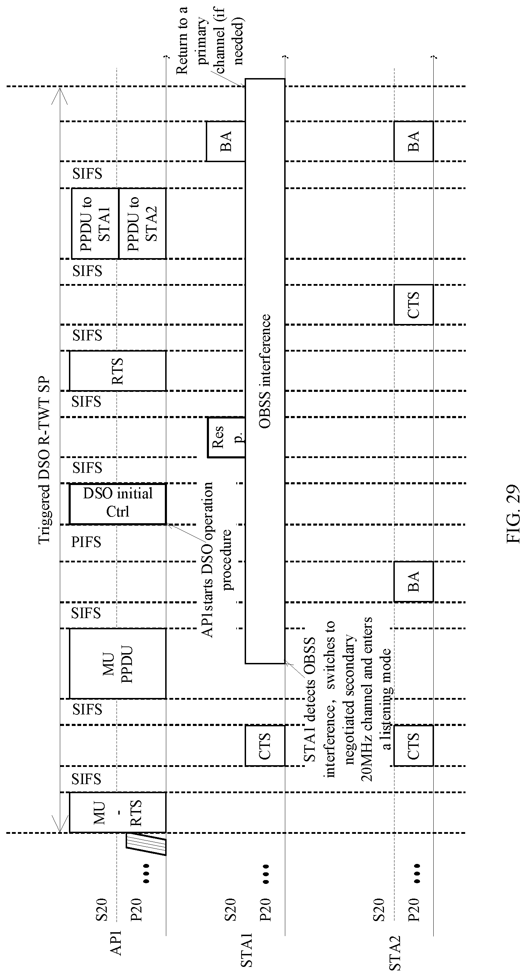

In Embodiment 9, the previous negotiation process of DSO R-TWT may be the same as that of Embodiment 1 shown in FIG. 21, and the DSO R-TWT SP process may be as shown in FIG. 29. Referring to FIG. 29, Embodiment 9 is similar to the DSO R-TWT SP scenario of Embodiment 1, with the difference that after the AP1 enters the SP, the AP1 simultaneously schedules the STA1 and the STA2 to operate on the primary channel. After the AP1 transmits a DL MU PPDU, the AP1 may not receive a BA from the STA1 but receives a BA from the STA2. For this situation of receiving the BA from a part of the STAs, the AP1 may adopt a special error recovery mechanism. That is, after PIFS, the AP1 retriggers the STA. Here, the triggering manner may be modified to transmitting a DSO initial control frame ((MU-)RTS frame) on the full channel (the channel list negotiated previously) and only triggering the STA1. After the AP1 receives the response from the STA1, the AP1 may retransmit the PPDU to the STA1 on the DSO channel determined by previous negotiation and transmit a PPDU to the STA2 on the primary channel. After the SP ends, the STA1 may decide whether to return to the primary channel based on its own needs.

### Embodiment 10

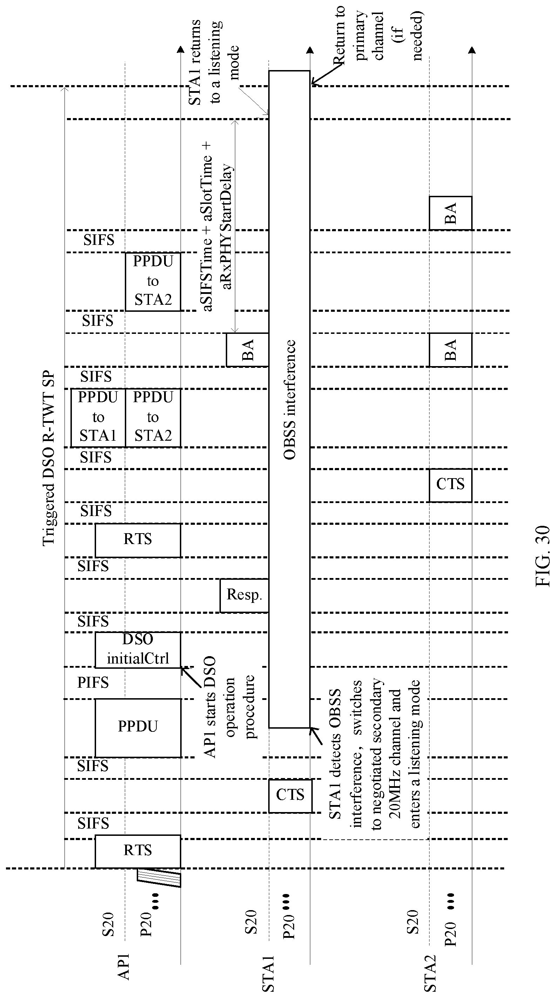

In Embodiment 10, the previous negotiation process of DSO R-TWT may be the same as that of Embodiment 1 shown in FIG. 21, and the DSO R-TWT SP process may be as shown in FIG. 30. Referring to FIG. 30, Embodiment 10 is similar to the DSO R-TWT SP scenario of Embodiment 1, with the difference that after the AP1 exchanges one or more PPDUs with the STA1 and the STA2 on the DSO channel determined by previous negotiation and the primary channel, if the STA1 fails to receive the PHY-RXSTART.indication primitive within aSIFSTime + aSlotTime + aRxPHYStartDelay after the response, the STA1 may return to the listening mode on the DSO channel determined by previous negotiation. After the SP ends, the STA1 may decide whether to return to the primary channel based on its own needs.

### Embodiment 11

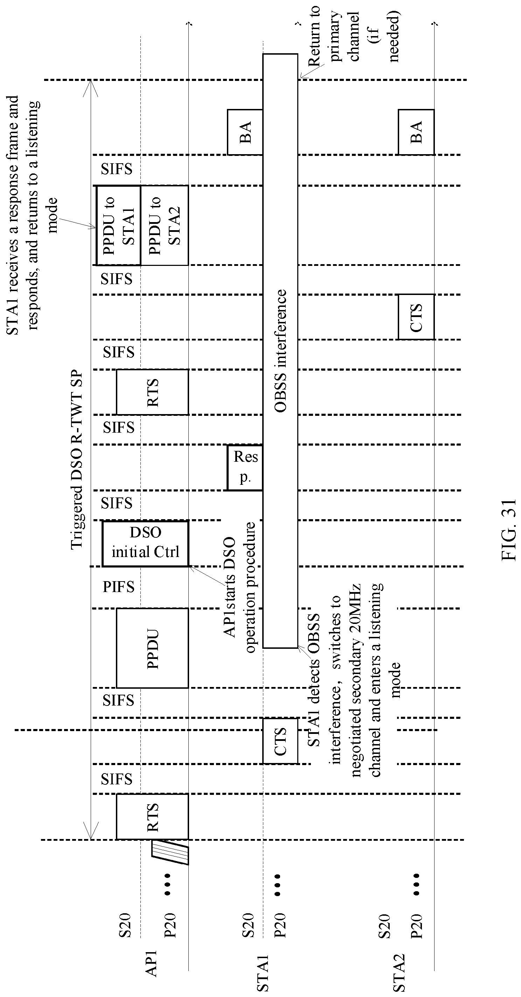

In Embodiment 11, the previous negotiation process of DSO R-TWT may be the same as that of Embodiment 1 shown in FIG. 21, and the DSO R-TWT SP process may be as shown in FIG. 31. Referring to FIG. 31, Embodiment 11 is similar to the DSO R-TWT SP scenario of Embodiment 1, with the difference that after the AP1 exchanges one or more PPDUs with the STA1 and the STA2 on the DSO channel determined by previous negotiation and the primary channel, if the STA1 receives a specified type of frame (refer to the rules for STAs in DSO R-TWT described above), the STA1 may return to the listening mode on the DSO channel determined by previous negotiation after responding to that frame. After the SP ends, the STA1 may decide whether to return to the primary channel based on its own needs.

### Embodiment 12

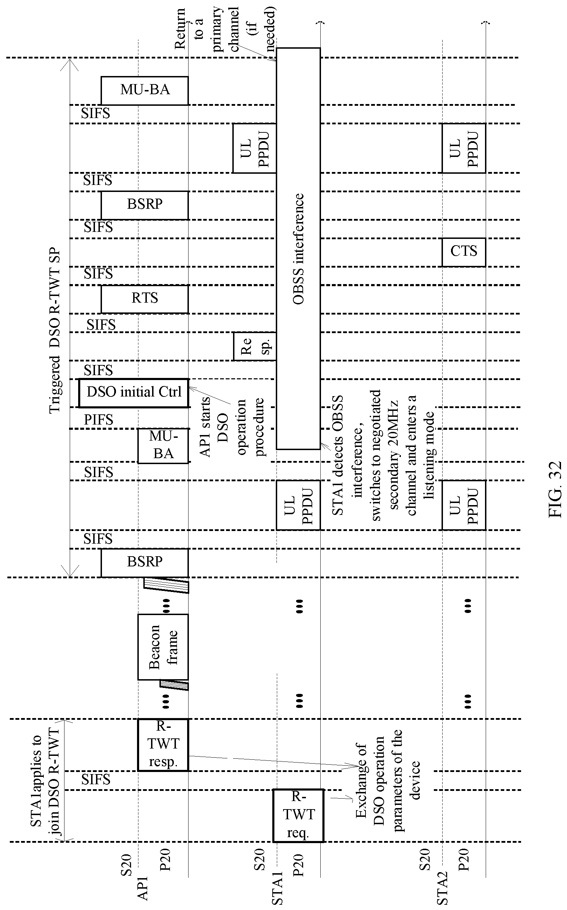

As shown in FIG. 32, in Embodiment 12, the STA1 may apply to join DSO R-TWT of the AP1 and perform R-TWT req./resp. interaction with the AP1. During the R-TWT req./resp., the STA1 and the AP1 may exchange DSO operation parameters within the DSO R-TWT (e.g., negotiate the DSO channel). After the AP1 enters the SP, the AP1 may simultaneously schedule the STA1 and the STA2 to operate on the primary channel (which may be triggered by BSRP or by a basic trigger. In this embodiment, the STAs may all adopt an implicit buffer status report (BSR) reporting manner, i.e., implicitly conveying the BSR in the quality of service (QoS) control field or BSR control subfield of frames such as PPDU). The AP1 fails to receive UL PPDU from the STA1 but receives the UL PPDU from the STA2. For this situation where UL PPDU is received from only a part of the STAs, the AP1 may adopt a special error recovery mechanism: after a PIFS, the AP1 may transmit a DSO initial control frame ((MU-)RTS frame) on the full channel (the previously negotiated channel list) to re-trigger the STA1. After the AP1 receives the response from the STA1, the AP1 then triggers other STAs (the STA2), and subsequently triggers the STA1 and the STA2 simultaneously to transmit UL PPDU on the DSO channel determined by the previous negotiation and the primary channel. After the SP ends, the STA1 may decide whether to return to the primary channel based on its own needs.

### Embodiment 13

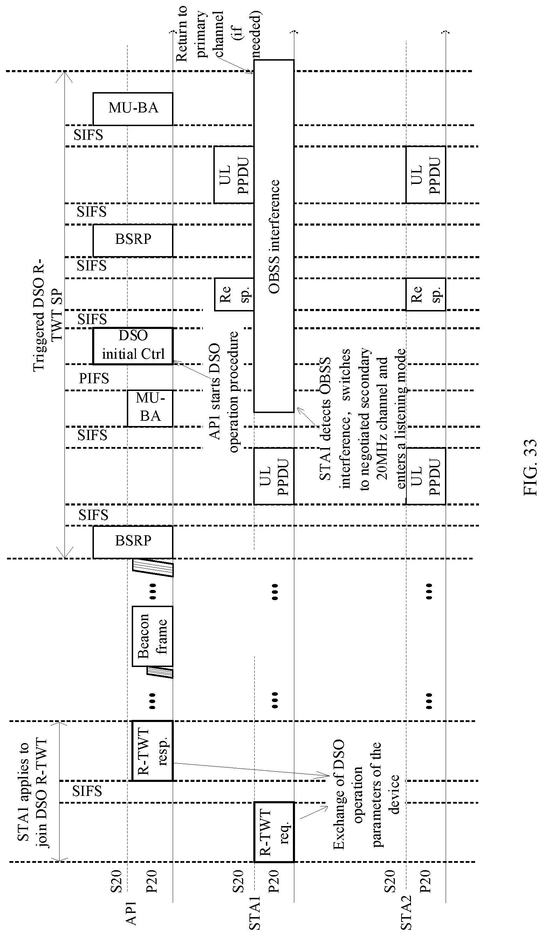

Referring to FIG. 33, Embodiment 13 is similar to the DSO R-TWT SP scenario of Embodiment 12, with the difference that the DSO initial control frame in Embodiment 13 may be implemented using BSRP. When the AP1 fails to normally receive data after SIFS, the AP1 may transmit the DSO initial control frame on the full channel after PIFS to simultaneously trigger the STA1 and the STA2, and then interacts with the STA1 and the STA2 on the DSO channel determined by the previous negotiation and the primary channel, respectively. After the SP ends, the STA1 decides whether to return to the primary channel based on its own needs.

### Embodiment 14

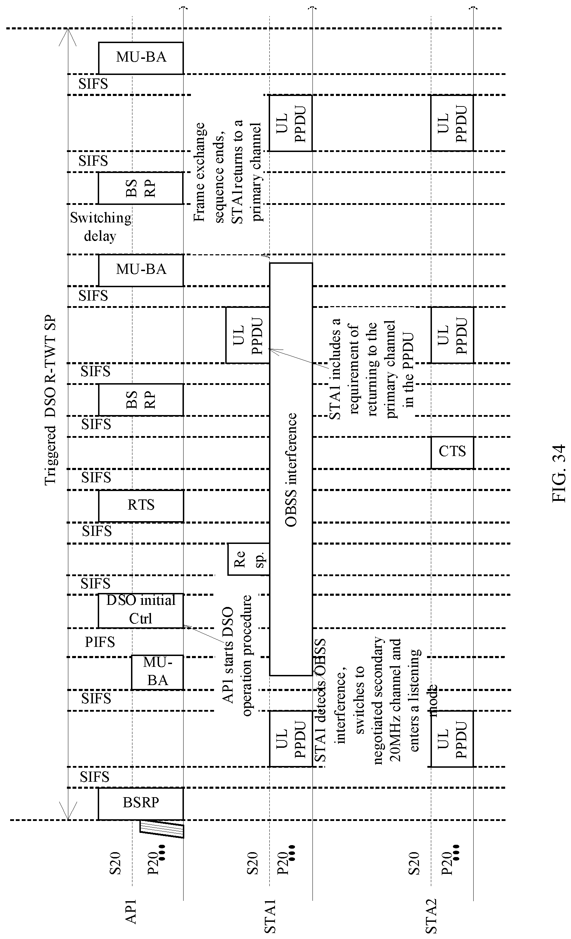

In Embodiment 14, based on the scenario where the STA1 switches back to the primary channel after the DSO frame exchange sequence in Embodiment 12 ends, during the previous negotiation process of the DSO R-TWT (not shown in the figure), the AP1 may set the channel switching indication subfield of the EHT operation element to be 1 in the R-TWT response, indicating that the STA1 may switch back to the primary channel after the DSO frame exchange sequence ends. Referring to FIG. 34, the interaction in the first half of the DSO R-TWT SP is the same as that in Embodiment 12 shown in FIG. 32. After the DSO frame exchange sequence ends, the STA1 may expect to switch back to the primary channel, because the STA1 predicts that OBSS interference ends based on statistical information from the previous SP or due to other reasons. Then, the STA1 may indicate this requirement in the UL PPDU and feed back related information for channel switching such as its own switching delay. Then, the STA1 may obtain the primary channel status by performing CCA on the primary channel. The AP1 may interact with the STA1 and the STA2 on the primary channel after the switching delay + SIFS time following the corresponding BA. Situations where prediction of the STA1 fails and where the STA1 has no data to be transmitted after the DSO frame exchange sequence ends are similar to Embodiments 6 and 7 in the DL scenario, and are not shown in FIG. 34.

### Embodiment 15

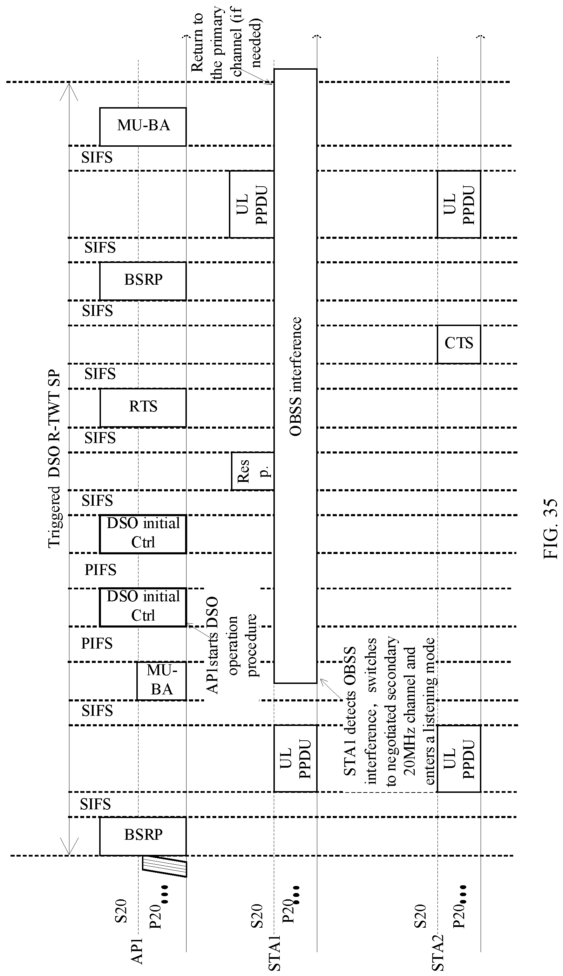

In Embodiment 15, the previous negotiation process for DSO R-TWT may be the same as that in Embodiment 12 shown in FIG. 32, and the DSO R-TWT SP process may be as shown in FIG. 35. Referring to FIG. 35, Embodiment 15 is similar to the previous interaction of the DSO R-TWT SP in Embodiment 12, with the difference that after the AP1 transmits the DSO initial control frame ((MU-)RTS frame) on the full channel (the previously negotiated channel list), the STA1 may not have completed channel switching and thus cannot respond to the AP1. Then, the AP1 may retransmit the DSO initial control frame after PIFS. The subsequent process after receiving the response from the STA1 on the DSO channel determined by the previous negotiation is the same as that in Embodiment 12.

### Embodiment 16

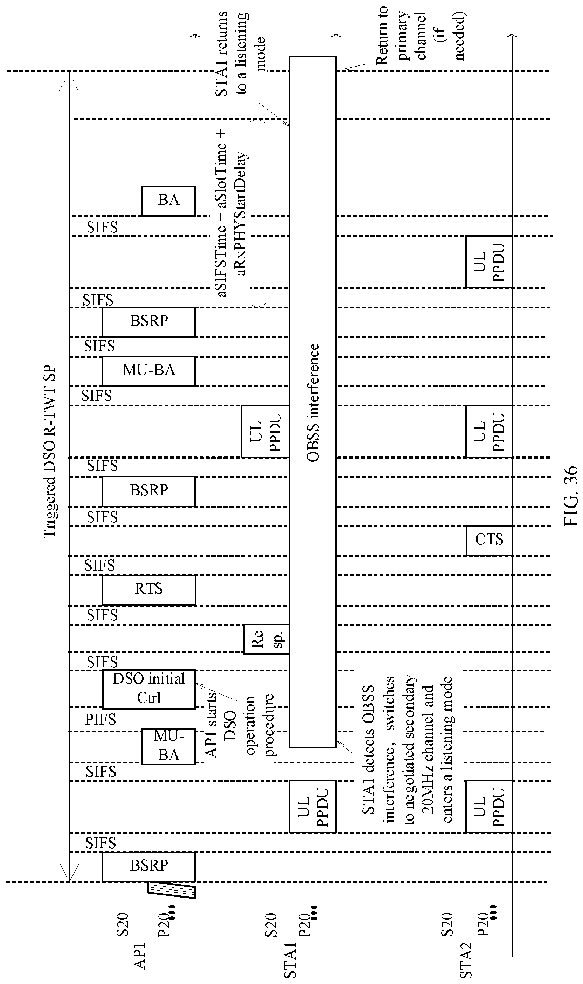

In Embodiment 16, the previous negotiation process for DSO R-TWT may be the same as that in Embodiment 12 shown in FIG. 32, and the DSO R-TWT SP process may be as shown in FIG. 36. Referring to FIG. 36, Embodiment 16 is similar to the DSO R-TWT SP scenario of Embodiment 12, with the difference that after the AP1 exchanges one or more PPDUs with the STA1 and the STA2 on the DSO channel determined by the previous negotiation and the primary channel, if the STA1 fails to receive the PHY-RXSTART.indication primitive within the time of aSIFSTime + aSlotTime + aRxPHYStartDelay after receiving a control frame that does not require a response, the STA1 may return to the listening mode on the DSO channel determined by the previous negotiation. After the SP ends, the STA1 may decide whether to return to the primary channel based on its own needs.

### Embodiment 17

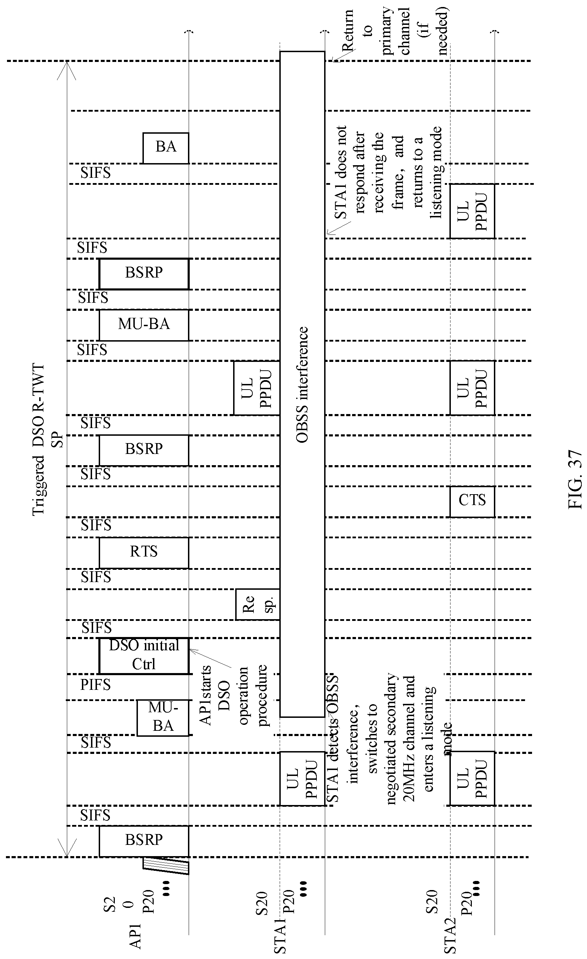

In Embodiment 17, the previous negotiation process for DSO R-TWT may be the same as that in Embodiment 12 shown in FIG. 32, and the DSO R-TWT SP process may be as shown in FIG. 37. Referring to FIG. 37, Embodiment 17 is similar to the DSO R-TWT SP scenario of Embodiment 12, with the difference that after the AP1 exchanges one or more PPDUs with the STA1 and the STA2 on the DSO channel determined by the previous negotiation and the primary channel, if the STA1 receives a control frame that requires a response but does not respond, the STA1 may return to the listening mode, and the AP1 only schedules transmission of the STA2 on the primary channel. After the SP ends, the STA1 may decide whether to return to the primary channel based on its own needs.

In the following Embodiments 18 to 20, when negotiating the DSO channel during the DSO R-TWT negotiation, the AP side may use the collision info field of the TWT element. In this case, the AP may not only indicate the negotiated DSO channel through the DSO R-TWT channel (bitmap) field or the PS160 subfield and RU allocation subfield of the EHT variant user info field, but also enhance the rules for channel usage within the SP by setting the collision info subfield of the primary channel collision info field. The STA may select the channel to be used based on the meanings of these fields. Depending on different values set by the AP for the collision info field, the STA may perform different operations. The following uses DL transmission as an example to illustrate three different value settings.

### Embodiment 18

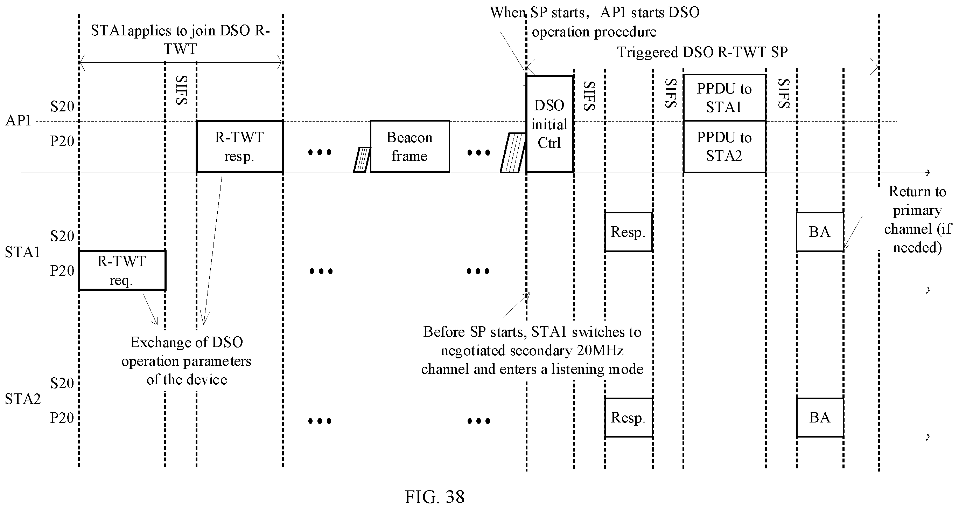

In Embodiment 18, the AP may set the collision info field of the TWT element to be 2. When the STA receives, during the DSO R-TWT negotiation, a TWT element that sets the collision info subfield of the primary channel collision info field to be 2, the STA should preferentially use the negotiated DSO channel within the corresponding DSO R-TWT SP. As shown in FIG. 38, the STA may choose to switch to the DSO channel (secondary 20MHz channel) determined by the previous negotiation before entering the SP. After the AP1 enters the SP, the AP1 simultaneously schedules the STA1 and the STA2 to operate on the secondary channel determined by the previous negotiation and the primary channel, respectively. After the SP ends, the STA1 may return to the primary channel if needed.

### Embodiment 19

In Embodiment 19, the AP may set the collision info field of the TWT element to be 1. When the STA receives, during the DSO R-TWT negotiation, a TWT element that sets the collision info subfield of the primary channel collision info field to be 1, the STA should preferentially use the primary channel within the corresponding DSO R-TWT SP, and use the negotiated DSO channel only when the primary channel is unavailable due to OBSS interference. The operation in this case is similar to the DL transmission example of Embodiment 1 shown in FIG. 21.

### Embodiment 20

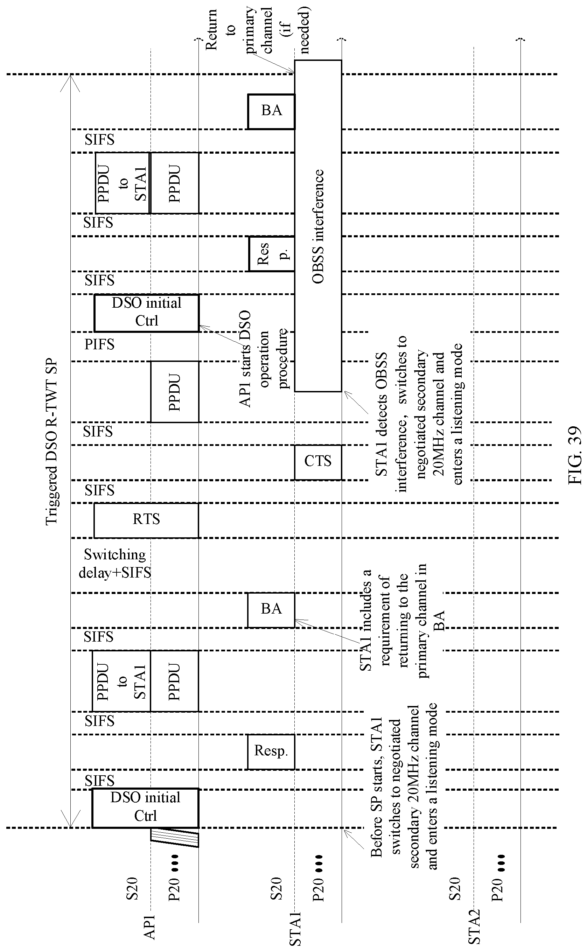

In Embodiment 20, the AP may set the collision info field of the TWT element to be 3. When the STA receives, during the DSO R-TWT negotiation, a TWT element that sets the collision info subfield of the primary channel collision info field to be 3, the STA may preferentially use the negotiated DSO channel within the corresponding DSO R-TWT SP; and if the STA switches back to the primary channel within the SP, the STA may also use the negotiated DSO channel when OBSS interference occurs on the primary channel, combining the operational procedures of setting this field to be 1 and 2. During the previous negotiation, the AP1 sets the channel switching indication subfield of the EHT operation element to be 1 in the R-TWT response, indicating that the STA1 may switch back to the primary channel after the DSO frame exchange sequence ends. The negotiation process is omitted in FIG. 39. Referring to FIG. 39, before the DSO R-TWT SP begins, the STA1 may choose to switch to the secondary channel determined by the previous negotiation in advance. At the start of the SP, the AP1 may transmit the DSO initial control frame on the full channel. During the DSO frame exchange sequence, the AP1 may transmit the PPDU to the STA1 on the secondary channel determined by the previous negotiation while transmitting redundant PPDU on the primary channel to occupy the primary channel. After the DSO frame exchange sequence ends, the STA1 may choose to switch back to the primary channel and indicate this information to the AP in the BA. Then, the AP1 may interact with the STA1 on the primary channel. During the interaction, transmission of the AP1 fails due to OBSS interference on the primary channel, and then the AP1 may initiate the DSO operation procedure. The subsequent operations are the same as those in Embodiment 5. After the SP ends, the STA1 may decide whether to return to the primary channel based on its own needs.

Based on the above embodiments, according to the wireless communication method in the embodiments of this application, the communication device can access channels without relying on the primary 20MHz channel, and can utilize secondary channels when the primary 20MHz channel is busy, thereby greatly improving the utilization of channel resources. Moreover, in combination with the use of DSO channels (secondary channels), the R-TWT is allowed to perform error recovery when transmission fails due to the primary channel being unavailable caused by OBSS interference, etc., and the DSO channel negotiated during R-TWT establishment is utilized to ensure continued data transmission. Furthermore, the STAs can apply to change operation parameters, such as applying to change the DSO channel used based on occupancy rate information of the primary channel over a period of time. Based on this, it is beneficial for the AP to interact with STAs in a more appropriate manner, while causing channel usage more flexible, thereby improving the overall network throughput. Additionally, for the DSO technology, the wireless communication method in the embodiments of this application can reduce padding of the first control frame in its operation procedure to 0, thereby facilitating reducing latency.

The foregoing describes the method embodiments of this application in detail with reference to FIGs. 1 to 39. The following describes the apparatus embodiments of this application in detail with reference to FIGs. 40 to 42. It should be understood that the descriptions of the method embodiments and the apparatus embodiments correspond to each other, so parts not described in detail herein may be referred to the above method embodiments.

FIG. 40 is a schematic structural diagram of a communication device according to an embodiment of this application. The communication device 4000 shown in FIG. 40 may be a first AP. The communication device 4000 may include a transmitting module 4010. The transmitting module 4010 may be configured to transmit first information to a first STA. The first information may include a first operation parameter. The first operation parameter may be the subchannel or subband operation parameters adopted by the first STA during a first predetermined service period.

In embodiments of this application, the aforementioned communication device 4000 may be used to perform some or all of the method steps performed by the first AP in the aforementioned method embodiments. For example, the communication device 4000 may be used to perform some or all of the method steps performed by the first AP in the methods described with reference to FIGs. 7 to 39. The communication device 4000 includes units or modules for performing the method steps corresponding to the aforementioned FIGs. 7 to 39. The method flow has been described in detail in the foregoing implementations. The modules in this embodiment have the same functions or perform the same steps, which are not repeated here, but should be understood by those skilled in the art. The descriptions corresponding to the aforementioned FIGs. 7 to 39 may be incorporated into this example, corresponding to the modules in the communication device 4000.

FIG. 41 is a schematic structural diagram of a communication device according to another embodiment of this application. The communication device 4100 shown in FIG. 41 may be a first STA. The communication device 4100 may include a receiving module 4110. The receiving module 4110 may be configured to receive first information transmitted by a first AP. The first information may include a first operation parameter. The first operation parameter may be a subchannel or subband operation parameter adopted by the first STA during a first predetermined service period.

In the embodiments of this application, the aforementioned communication device 4100 may be used to perform some or all of the method steps performed by the first STA in the aforementioned method embodiments. For example, the communication device 4100 may be used to perform some or all of the method steps performed by the first STA in the methods described with reference to FIGs. 7 to 39. The communication device 4100 includes units or modules for performing the method steps corresponding to the aforementioned FIGs. 7 to 39. The method flow has been described in detail in the foregoing implementations. The modules in this embodiment have the same functions or perform the same steps, which are not repeated here, but should be understood by those skilled in the art. The descriptions corresponding to the aforementioned FIGs. 7 to 39 may be incorporated into this example, corresponding to the modules in the communication device 4100.

FIG. 42 is a schematic structural diagram of a communication apparatus according to an embodiment of this application. The dashed lines in FIG. 42 indicate that the unit or module is optional. The apparatus 4200 may be used to implement the method described in the aforementioned method embodiments. The apparatus 4200 may be a chip, a terminal device, or a network device.

The apparatus 4200 may include one or more processors 4210. The processor 4210 may support the apparatus 4200 in implementing the method described in the aforementioned method embodiments. The processor 4210 may be a general-purpose processor or a dedicated processor. For example, the processor may be a central processing unit (central processing unit, CPU). Alternatively, the processor may also be other general-purpose processors, digital signal processors (digital signal processor, DSP), application-specific integrated circuits (application-specific integrated circuit, ASIC), field-programmable gate arrays (field-programmable gate array, FPGA), or other programmable logic devices, discrete gates or transistor logic devices, discrete hardware components, etc. The general-purpose processor may be a microprocessor, or the processor may also be any conventional processor, etc.

The apparatus 4200 may further include one or more memories 4220. A program is stored on the memory 4220, which may be executed by the processor 4210, to cause the processor 4210 to execute the method described in the aforementioned method embodiments. The memory 4220 may be separate from the processor 4210 or integrated into the processor 4210.

The apparatus 4200 may further include a transceiver 4230. The processor 4210 may communicate with other devices or chips through the transceiver 4230. For example, the processor 4210 may transmit data to and receive data from other devices or chips through the transceiver 4230.

The embodiments of this application further provide a computer-readable storage medium for storing a program. This computer-readable storage medium may be applied to the communication device provided in the embodiments of this application, and the program causes a computer to execute the methods in the various embodiments of this application.

The embodiments of this application further provide a computer program product. This computer program product includes a program. This computer program product may be applied to the communication device provided in the embodiments of this application, and the program causes a computer to execute the methods in the various embodiments of this application.

The embodiments of this application further provide a computer program. This computer program may be applied to the communication device provided in the embodiments of this application, and this computer program causes a computer to execute the methods in the various embodiments of this application.

It should be understood that all or part of the functions of the communication device in this application may also be implemented by software functions running on hardware, or by virtualized functions instantiated on a platform (e.g., a cloud platform).

It should be understood that the terms "system" and "network" in this application may be used interchangeably. In addition, the terms used in this application are only for explaining the specific embodiments of this application and are not intended to limit this application. The terms "first", "second", "third", and "fourth", etc., in the specification and claims of this application and the accompanying drawings are used to distinguish different objects, not to describe a specific order. Furthermore, the terms "include" and "have" and any variations thereof are intended to cover non-exclusive inclusion.

In the embodiments of this application, the mentioned "indication" may be direct indication, indirect indication, or may indicate an association relationship. For example, A indicating B may mean that A directly indicates B, for example, B may be obtained through A; it may also mean that A indirectly indicates B, for example, A indicates C, and B may be obtained through C; it may also indicate that there is an association relationship between A and B.

In the embodiments of this application, "B corresponding to A" indicates that B is associated with A, and B may be determined based on A. However, it should also be understood that determining B based on A does not mean that B is determined only based on A; B may also be determined based on A and/or other information.

In the embodiments of this application, the term "correspond" may indicate a direct or indirect correspondence relationship between two entities, may also indicate an association relationship between them, or may refer to relationships such as indicating and being indicated, configuring and being configured, etc.

In the embodiments of this application, the "protocol" may refer to standard protocols in the field of communications, for example, it may include LTE protocols, NR protocols, and related protocols applied in future communication systems, which are not limited in this application.

In the embodiments of this application, the term "and/or" is merely a description of an association relationship between associated objects, indicating that three relationships may exist. For example, A and/or B may indicate: only A exists alone, both A and B exist, or only B exists. In addition, the character "/" in this application generally indicates an "or" relationship between the associated objects.

In the embodiments of this application, "include" may refer to direct inclusion or indirect inclusion. Optionally, "include" mentioned in the embodiments of this application may be replaced with "indicate" or "used to determine". For example, A includes B may be replaced with A indicates B, or A is used to determine B.

In various embodiments of this application, the size of the sequence numbers of the above processes does not imply the order of execution. The execution order of each process should be determined by its function and internal logic, and should not impose any limitation on the implementation process of the embodiments of this application.

In the several embodiments provided in this application, it should be understood that the disclosed systems, devices, and methods may be implemented in other ways. For example, the device embodiments described above are merely illustrative. For example, the division of units is only a logical function division. In actual implementation, there may be other division methods. For example, multiple units or components may be combined or integrated into another system, or some features may be omitted or not executed. Additionally, the mutual coupling or direct coupling or communication connections shown or discussed may be indirect coupling or communication connections through some interfaces, devices, or units, which may be electrical, mechanical, or in other forms.

The units described as separate components may or may not be physically separated. The components displayed as units may or may not be physical units, meaning they may be located in one place or distributed across multiple network units. Some or all of the units may be selected according to actual needs to achieve the objectives of the embodiments of this application.

Furthermore, the functional units in the various embodiments of this application may be integrated into one processing unit, or each unit may exist physically separately, or two or more units may be integrated into one unit.

The above embodiments may be implemented entirely or partially through software, hardware, firmware, or any combination thereof. When implemented using software, they may be implemented entirely or partially in the form of a computer program product. The computer program product includes one or more computer instructions. When the computer program instructions are loaded and executed on a computer, they entirely or partially generate the processes or functions described in the embodiments of this application. The computer may be a general-purpose computer, a dedicated computer, a computer network, or other programmable devices. The computer instructions may be stored in a computer-readable storage medium or transmitted from one computer-readable storage medium to another. For example, the computer instructions may be transmitted from one website, computer, server, or data center to another website, computer, server, or data center via wired (e.g., coaxial cable, optical fiber, digital subscriber line (DSL)) or wireless (e.g., infrared, wireless, microwave, etc.) manner. The computer-readable storage medium may be any available medium that can be read by a computer or a data storage device such as a server or data center that integrates one or more available media. The available medium may be a magnetic medium (e.g., floppy disk, hard disk, magnetic tape), an optical medium (e.g., digital video disc (digital video disc, DVD)), or a semiconductor medium (e.g., solid state disk (solid state disk, SSD)), etc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first access point AP, first information to a first station STA, wherein the first information comprises a first operation parameter, the first operation parameter being a subchannel or subband operation parameter adopted by the first STA during a first predetermined service period.

2. The method according to claim 1, wherein the first operation parameter corresponds to a dynamic subchannel or subband operation, and the first operation parameter is used to indicate a subchannel or subband that the first AP allows the first STA to use during the first predetermined service period.

3. The method according to claim 1 or 2, wherein before the first AP transmits the first information to the first STA, the method comprises:
receiving, by the first AP, second information transmitted by the first STA, wherein the second information comprises first feedback information, and the first feedback information is used to indicate feedback information on a primary channel and/or a secondary channel from the first STA.

4. The method according to claim 3, wherein the first feedback information comprises interference information of the primary channel and/or the secondary channel, and the interference information comprises interference type information and interference occupancy rate information.

5. The method according to claim 3 or 4, wherein the second information further comprises a second operation parameter, the second operation parameter being used to indicate a subchannel or subband that the first STA expects to use during the first predetermined service period.

6. The method according to any one of claims 1 to 5, wherein the first information further comprises first indication information, the first indication information being used to indicate a recommendation from the first AP regarding a channel to be used by the first STA during the first predetermined service period.

7. The method according to any one of claims 1 to 6, wherein the first information is carried in a first message, and the first message is used to respond to a request for establishing the first predetermined service period, or the first message is used to update a parameter of the first predetermined service period.

8. The method according to claim 7, wherein the first message comprises a first element, the first element comprises a first field, and the first field is used to carry the first operation parameter.

9. The method according to claim 8, wherein the first element further comprises a second field, and the second field is used to carry first indication information.

10. The method according to claim 8 or 9, wherein the first element further comprises a third field, and the third field is used to indicate whether the first field is valid.

11. The method according to claim 10, wherein the third field is used to further indicate capability information of the first AP during the first predetermined service period.

12. The method according to any one of claims 9 to 11, wherein the first element further comprises a fourth field, and the fourth field is used to indicate whether the second field is valid.

13. The method according to any one of claims 3 to 12, wherein the second information is carried in a second message, and the second message is used to request establishment of the first predetermined service period.

14. The method according to claim 13, wherein the second message comprises a second element, the second element comprises a fifth field, and the fifth field is used to carry the first feedback information.

15. The method according to claim 14, wherein the second element further comprises a sixth field, and the sixth field is used to carry a second operation parameter.

16. The method according to claim 14 or 15, wherein the second element further comprises a seventh field, and the seventh field is used to indicate whether the fifth field is valid.

17. The method according to claim 15 or 16, wherein the second element further comprises an eighth field, and the eighth field is used to indicate whether the sixth field is valid.

18. The method according to any one of claims 7 to 17, further comprising:
after successfully establishing the first predetermined service period, exchanging, by the first AP during the first predetermined service period, frames with the first STA on a primary channel and/or secondary channel, wherein a subchannel or subband corresponding to the primary channel and/or secondary channel is comprised in the subchannel or subband corresponding to the first operation parameter indicated by the first message.

19. The method according to claim 18, wherein before the first AP exchanges frames with the first STA on the primary channel and/or secondary channel, the method further comprises:
transmitting, by the first AP, an initial control frame to the first STA, the initial control frame being used to instruct the first STA to switch to the subchannel or subband indicated by the first operation parameter.

20. The method according to claim 19, wherein the initial control frame comprises one or more of the following information:
switching delay information of the first STA;
identification information of the first STA; or
an operating subchannel or subband corresponding to the first STA.

21. The method according to claim 19 or 20, wherein the initial control frame is a multi-user request-to-send MU-RTS frame or a buffer status report poll BSRP frame.

22. The method according to any one of claims 1 to 6, wherein the first information is carried in a first frame within the first predetermined service period.

23. The method according to claim 22, wherein the first frame is generated based on a second frame of the first STA, and the second frame carries first feedback information.

24. The method according to claim 22 or 23, further comprising:
exchanging, by the first AP during the first predetermined service period, frames with the first STA on a primary channel and/or secondary channel, wherein a subchannel or subband corresponding to the primary channel and/or secondary channel is comprised in the subchannel or subband corresponding to the first operation parameter indicated by the first frame.

25. The method according to any one of claims 1 to 24, further comprising:
receiving, by the first AP, third information transmitted by the first STA, wherein the third information is used to indicate that a service period is the first predetermined service period.

26. The method according to claim 25, wherein the third information is carried in a third element, the third element is carried in a third message, and the third message is used to request establishment of the first predetermined service period.

27. The method according to any one of claims 1 to 26, further comprising:
transmitting, by the first AP, fourth information to the first STA, wherein the fourth information is used to indicate that a service period is the first predetermined service period.

28. The method according to claim 27, wherein the fourth information is carried in a fourth element, the fourth element is carried in a fourth message, and the fourth message is used to respond to a request for establishing the first predetermined service period.

29. The method according to any one of claims 1 to 28, further comprising:
transmitting, by the first AP, fifth information to the first STA, wherein the fifth information is used to indicate whether the first STA is required to switch back to the primary channel when a frame exchange sequence on a secondary channel ends within the first predetermined service period.

30. The method according to claim 29, wherein the fifth information is carried in a fifth element, the fifth element is carried in a fifth message, and the fifth message is used to respond to a request for establishing the first predetermined service period, or the fifth message is carried in a beacon frame within the first predetermined service period.

31. The method according to any one of claims 1 to 30, further comprising:
transmitting, by the first AP, sixth information to the first STA, the sixth information being used to indicate that the first AP supports the first predetermined service period.

32. The method according to claim 31, wherein the sixth information is carried in a sixth element, and the sixth element is carried in a beacon frame within the first predetermined service period.

33. The method according to any one of claims 1 to 32, further comprising:
receiving, by the first AP, seventh information transmitted by the first STA, wherein the seventh information is used to indicate that the first STA supports the first predetermined service period.

34. The method according to claim 33, wherein the seventh information is carried in a seventh element, and the seventh element is carried in an association request frame or probe request frame within the first predetermined service period.

35. The method according to any one of claims 1 to 34, further comprising:
if the first AP transmits data to the first STA on a primary channel within the first predetermined service period, determining, by the first AP, a retransmission mechanism for the data based on whether the first STA has switched to a secondary channel, in a case that the first AP fails to receive a BA for the data from the first STA.

36. The method according to claim 35, wherein the determining, by the first AP, a retransmission mechanism for the data based on whether the first STA has switched to the secondary channel comprises:
if the first STA has not switched to the secondary channel, retransmitting, by the first AP, the data to the first STA on the primary channel; and
if the first STA has switched to the secondary channel, retransmitting, by the first AP, the data to the first STA on the secondary channel.

37. The method according to any one of claims 1 to 36, wherein the first predetermined service period is a restricted target wake time R-TWT service period SP.

38. The method according to claim 37, wherein the first information is used to update a parameter related to dynamic subband/subchannel operation (DSO operation) among a parameter of the R-TWT SP.

39. The method according to claim 38, wherein the first information is carried in a response message of the R-TWT or an information frame of the R-TWT.

40. The method according to claim 37, wherein the first information is used to update a DSO operation parameter within the R-TWT SP.

41. The method according to claim 40, wherein the first information is carried in a channel state information CSI frame or a data frame within the R-TWT SP.

42. The method according to claim 40 or 41, wherein a range of the subchannel or subband indicated by the updated DSO operation parameter is smaller than a range of the subchannel or subband indicated by the parameter of the R-TWT SP.

43. A wireless communication method, comprising:
receiving, by a first station STA, first information transmitted by a first access point AP, wherein the first information comprises a first operation parameter, and the first operation parameter is a subchannel or subband operation parameter adopted by the first STA during a first predetermined service period.

44. The method according to claim 43, wherein the first operation parameter corresponds to a dynamic subchannel or subband operation, and the first operation parameter is used to indicate a subchannel or subband that the first AP allows the first STA to use during the first predetermined service period.

45. The method according to claim 43 or 44, wherein before the first STA receives the first information transmitted by the first AP, the method comprises:
transmitting, by the first STA, second information to the first AP, wherein the second information comprises first feedback information, and the first feedback information is used to indicate feedback information on a primary channel and/or a secondary channel from the first STA.

46. The method according to claim 45, wherein the first feedback information comprises interference information of the primary channel and/or the secondary channel, and the interference information comprises interference type information and interference occupancy rate information.

47. The method according to claim 45 or 46, wherein the second information further comprises a second operation parameter, and the second operation parameter is used to indicate a subchannel or subband that the first STA expects to use during the first predetermined service period.

48. The method according to any one of claims 43 to 47, wherein the first information further comprises first indication information, and the first indication information is used to indicate a recommendation from the first AP regarding a channel to be used by the first STA during the first predetermined service period.

49. The method according to any one of claims 43 to 48, wherein the first information is carried in a first message, and the first message is used to respond to a request for establishing the first predetermined service period.

50. The method according to claim 49, wherein the first message comprises a first element, the first element comprises a first field, and the first field is used to carry the first operation parameter.

51. The method according to claim 50, wherein the first element further comprises a second field, and the second field is used to carry first indication information.

52. The method according to claim 50 or 51, wherein the first element further comprises a third field, and the third field is used to indicate whether the first field is valid.

53. The method according to claim 52, wherein the third field is used to further indicate capability information of the first AP in the first predetermined service period.

54. The method according to any one of claims 51 to 53, wherein the first element further comprises a fourth field, and the fourth field is used to indicate whether the second field is valid.

55. The method according to any one of claims 45 to 54, wherein the second information is carried in a second message, and the second message is used to request establishment of the first predetermined service period.

56. The method according to claim 55, wherein the second message comprises a second element, the second element comprises a fifth field, and the fifth field is used to carry the first feedback information.

57. The method according to claim 56, wherein the second element further comprises a sixth field, and the sixth field is used to carry a second operation parameter.

58. The method according to claim 56 or 57, wherein the second element further comprises a seventh field, and the seventh field is used to indicate whether the fifth field is valid.

59. The method according to claim 57 or 58, wherein the second element further comprises an eighth field, and the eighth field is used to indicate whether the sixth field is valid.

60. The method according to any one of claims 48 to 59, further comprising:
after successfully establishing the first predetermined service period, exchanging, by the first STA during the first predetermined service period, frames with the first AP on a primary channel and/or a secondary channel, wherein a subchannel or subband corresponding to the primary channel and/or secondary channel is comprised in the subchannel or subband corresponding to the first operation parameter indicated by the first message.

61. The method according to claim 60, wherein before the first STA exchanges frames with the first AP on the primary channel and/or secondary channel, the method further comprises:
receiving, by the first STA, an initial control frame transmitted by the first AP, the initial control frame being used to instruct the first STA to switch to the subchannel or subband indicated by the first operation parameter.

62. The method according to claim 61, wherein the initial control frame comprises one or more of the following information:
switching delay information of the first STA;
identification information of the first STA; or
an operating subchannel or subband corresponding to the first STA.

63. The method according to claim 61 or 62, wherein the initial control frame is a multi-user request-to-send MU-RTS frame or a buffer status report poll BSRP frame.

64. The method according to any one of claims 43 to 47, wherein the first information is carried in a first frame within the first predetermined service period.

65. The method according to claim 64, wherein the first frame is generated based on a second frame of the first STA, and the second frame carries first feedback information.

66. The method according to claim 64 or 65, further comprising:
exchanging, by the first STA during the first predetermined service period, frames with the first AP on a primary channel and/or secondary channel, wherein a subchannel or subband corresponding to the primary channel and/or secondary channel is comprised in the subchannel or subband corresponding to the first operation parameter indicated by the first frame.

67. The method according to any one of claims 43 to 66, further comprising:
transmitting, by the first STA, third information to the first AP, wherein the third information is used to indicate that a service period is the first predetermined service period.

68. The method according to claim 67, wherein the third information is carried in a third element, the third element is carried in a third message, and the third message is used to request establishment of the first predetermined service period.

69. The method according to any one of claims 43 to 68, further comprising:
receiving, by the first STA, fourth information transmitted by the first AP, wherein the fourth information is used to indicate that a service period is the first predetermined service period.

70. The method according to claim 69, wherein the fourth information is carried in a fourth element, the fourth element is carried in a fourth message, and the fourth message is used to respond to a request for establishing the first predetermined service period.

71. The method according to any one of claims 43 to 70, further comprising:
receiving, by the first STA, fifth information transmitted by the first AP, wherein the fifth information is used to indicate whether the first STA is required to switch back to a primary channel when a frame exchange sequence on a secondary channel ends within the first predetermined service period.

72. The method according to claim 71, wherein the fifth information is carried in a fifth element, the fifth element is carried in a fifth message, and the fifth message is used to respond to a request for establishing the first predetermined service period, or the fifth message is carried in a beacon frame within the first predetermined service period.

73. The method according to any one of claims 43 to 72, further comprising:
receiving, by the first STA, sixth information transmitted by the first AP, the sixth information being used to indicate that the first AP supports the first predetermined service period.

74. The method according to claim 73, wherein the sixth information is carried in a sixth element, and the sixth element is carried in a beacon frame within the first predetermined service period.

75. The method according to any one of claims 43 to 74, further comprising:
transmitting, by the first STA, seventh information to the first AP, wherein the seventh information is used to indicate that the first STA supports the first predetermined service period.

76. The method according to claim 75, wherein the seventh information is carried in a seventh element, and the seventh element is carried in an association request frame or probe request frame within the first predetermined service period.

77. The method according to any one of claims 43 to 76, wherein the first predetermined service period is a restricted target wake time R-TWT service period SP.

78. The method according to claim 77, wherein the first information is used to update a parameter related to a dynamic subband/subchannel operation (DSO operation) among a parameter of the R-TWT SP.

79. The method according to claim 78, wherein the first information is carried in a response message of the R-TWT or an information frame of the R-TWT.

80. The method according to claim 77, wherein the first information is used to update a DSO operation parameter within the R-TWT SP.

81. The method according to claim 80, wherein the first information is carried in a channel state information CSI frame or a data frame within the R-TWT SP.

82. The method according to claim 80 or 81, wherein a range of the subchannel or subband indicated by the updated DSO operation parameter is smaller than a range of the subchannel or subband indicated by the parameter of the R-TWT SP.

83. A communication device, wherein the communication device is a first access point AP, and the communication device comprises:
a transmitting module, configured to transmit first information to a first station STA, wherein the first information comprises a first operation parameter, the first operation parameter being a subchannel or subband operation parameter adopted by the first STA during a first predetermined service period.

84. The communication device according to claim 83, wherein the first operation parameter corresponds to a dynamic subchannel or subband operation, and the first operation parameter is used to indicate a subchannel or subband that the first AP allows the first STA to use during the first predetermined service period.

85. The communication device according to claim 83 or 84, further comprising:
a receiving module, configured to receive, before the transmitting module transmits the first information to the first STA, second information transmitted by the first STA, wherein the second information comprises first feedback information, and the first feedback information is used to indicate feedback information on a primary channel and/or a secondary channel from the first STA.

86. The communication device according to claim 85, wherein the first feedback information comprises interference information of the primary channel and/or the secondary channel, and the interference information comprises interference type information and interference occupancy rate information.

87. The communication device according to claim 85 or 86, wherein the second information further comprises a second operation parameter, the second operation parameter being used to indicate a subchannel or subband that the first STA expects to use during the first predetermined service period.

88. The communication device according to any one of claims 83 to 87, wherein the first information further comprises first indication information, the first indication information being used to indicate a recommendation from the first AP regarding a channel to be used by the first STA during the first predetermined service period.

89. The communication device according to any one of claims 83 to 88, wherein the first information is carried in a first message, and the first message is used to respond to a request for establishing the first predetermined service period.

90. The communication device according to claim 89, wherein the first message comprises a first element, the first element comprises a first field, and the first field is used to carry the first operation parameter.

91. The communication device according to claim 90, wherein the first element further comprises a second field, and the second field is used to carry first indication information.

92. The communication device according to claim 90 or 91, wherein the first element further comprises a third field, and the third field is used to indicate whether the first field is valid.

93. The communication device according to claim 92, wherein the third field is used to further indicate capability information of the first AP during the first predetermined service period.

94. The communication device according to any one of claims 91 to 93, wherein the first element further comprises a fourth field, and the fourth field is used to indicate whether the second field is valid.

95. The communication device according to any one of claims 85 to 94, wherein the second information is carried in a second message, and the second message is used to request establishment of the first predetermined service period.

96. The communication device according to claim 95, wherein the second message comprises a second element, the second element comprises a fifth field, and the fifth field is used to carry the first feedback information.

97. The communication device according to claim 96, wherein the second element further comprises a sixth field, and the sixth field is used to carry a second operation parameter.

98. The communication device according to claim 96 or 97, wherein the second element further comprises a seventh field, and the seventh field is used to indicate whether the fifth field is valid.

99. The communication device according to claim 97 or 98, wherein the second element further comprises an eighth field, and the eighth field is used to indicate whether the sixth field is valid.

100. The communication device according to any one of claims 88 to 99, wherein the transmitting module is further configured to:
after successfully establishing the first predetermined service period, exchange, during the first predetermined service period, frames with the first STA on a primary channel and/or a secondary channel, wherein a subchannel or subband corresponding to the primary channel and/or secondary channel is comprised in the subchannel or subband corresponding to the first operation parameter indicated by the first message.

101. The communication device according to claim 100, wherein the transmitting module is further configured to:
before performing frame exchange with the first STA on the primary channel and/or the secondary channel, transmit an initial control frame to the first STA, the initial control frame being used to instruct the first STA to switch to the subchannel or subband indicated by the first operation parameter.

102. The communication device according to claim 101, wherein the initial control frame comprises one or more of the following information:
switching delay information of the first STA;
identification information of the first STA; or
an operating subchannel or subband corresponding to the first STA.

103. The communication device according to claim 101 or 102, wherein the initial control frame is a multi-user request-to-send MU-RTS frame or a buffer status report poll BSRP frame.

104. The communication device according to any one of claims 83 to 87, wherein the first information is carried in a first frame within the first predetermined service period.

105. The communication device according to claim 104, wherein the first frame is generated based on a second frame of the first STA, and the second frame carries first feedback information.

106. The communication device according to claim 104 or 105, wherein the transmitting module is further configured to:
exchange, during the first predetermined service period, frames with the first STA on a primary channel and/or a secondary channel, wherein a subchannel or subband corresponding to the primary channel and/or secondary channel is comprised in the subchannel or subband corresponding to the first operation parameter indicated by the first frame.

107. The communication device according to any one of claims 85 to 106, wherein the receiving module is further configured to:
receive third information transmitted by the first STA, wherein the third information is used to indicate that a service period is the first predetermined service period.

108. The communication device according to claim 107, wherein the third information is carried in a third element, the third element is carried in a third message, and the third message is used to request establishment of the first predetermined service period.

109. The communication device according to any one of claims 83 to 108, wherein the transmitting module is further configured to:
transmit fourth information to the first STA, wherein the fourth information is used to indicate that a service period is the first predetermined service period.

110. The communication device according to claim 109, wherein the fourth information is carried in a fourth element, the fourth element is carried in a fourth message, and the fourth message is used to respond to a request for establishing the first predetermined service period.

111. The communication device according to any one of claims 83 to 110, wherein the transmitting module is further configured to:
transmit fifth information to the first STA, wherein the fifth information is used to indicate whether the first STA is required to switch back to the primary channel when a frame exchange sequence on a secondary channel ends within the first predetermined service period.

112. The communication device according to claim 111, wherein the fifth information is carried in a fifth element, the fifth element is carried in a fifth message, the fifth message is used to respond to a request for establishing the first predetermined service period, or the fifth message is carried in a beacon frame within the first predetermined service period.

113. The communication device according to any one of claims 83 to 112, wherein the transmitting module is further configured to:
transmit sixth information to the first STA, the sixth information being used to indicate that the first AP supports the first predetermined service period.

114. The communication device according to claim 113, wherein the sixth information is carried in a sixth element, and the sixth element is carried in a beacon frame within the first predetermined service period.

115. The communication device according to any one of claims 85 to 114, wherein the receiving module is further configured to:
receive seventh information transmitted by the first STA, wherein the seventh information is used to indicate that the first STA supports the first predetermined service period.

116. The communication device according to claim 115, wherein the seventh information is carried in a seventh element, and the seventh element is carried in an association request frame or a probe request frame within the first predetermined service period.

117. The communication device according to any one of claims 83 to 116, wherein the communication device further comprises a determination module configured to: if the first AP transmits data to the first STA on a primary channel within the first predetermined service period, determine a retransmission mechanism for the data based on whether the first STA has switched to a secondary channel, in a case that the first AP fails to receive a BA for the data from the first STA.

118. The communication device according to claim 117, wherein the transmitting module is further configured to:
if the first STA has not switched to the secondary channel, continue to transmit the data to the first STA on the primary channel; and
if the first STA has switched to the secondary channel, transmit the data to the first STA on the secondary channel.

119. The communication device according to any one of claims 83 to 118, wherein the first predetermined service period is a restricted target wake time R-TWT service period SP.

120. The communication device according to claim 119, wherein the first information is used to update a parameter related to dynamic subband/subchannel operation (DSO operation) among a parameter of the R-TWT SP.

121. The communication device according to claim 120, wherein the first information is carried in a response message of the R-TWT or an information frame of the R-TWT.

122. The communication device according to claim 119, wherein the first information is used to update a DSO operation parameter within the R-TWT SP.

123. The communication device according to claim 122, wherein the first information is carried in a channel state information CSI frame or a data frame within the R-TWT SP.

124. The communication device according to claim 122 or 123, wherein a range of the subchannel or subband indicated by the updated DSO operation parameter is smaller than a range of the subchannel or subband indicated by the parameter of the R-TWT SP.

125. A communication device, wherein the communication device is a first station STA, and the communication device comprises:
a receiving module, configured to receive first information transmitted by a first access point AP, wherein the first information comprises a first operation parameter, and the first operation parameter is a subchannel or subband operation parameter adopted by the first STA during a first predetermined service period.

126. The communication device according to claim 125, wherein the first operation parameter corresponds to a dynamic subchannel or subband operation, and the first operation parameter is used to indicate a subchannel or subband that the first AP allows the first STA to use during the first predetermined service period.

127. The communication device according to claim 125 or 126, wherein the communication device further comprises:
a transmitting module, configured to transmit second information to the first AP before the receiving module receives the first information transmitted by the first AP, wherein the second information comprises first feedback information, and the first feedback information is used to indicate feedback information on a primary channel and/or a secondary channel from the first STA.

128. The communication device according to claim 127, wherein the first feedback information comprises interference information of the primary channel and/or the secondary channel, and the interference information comprises interference type information and interference occupancy rate information.

129. The communication device according to claim 127 or 128, wherein the second information further comprises a second operation parameter, and the second operation parameter is used to indicate a subchannel or subband that the first STA expects to use during the first predetermined service period.

130. The communication device according to any one of claims 125 to 129, wherein the first information further comprises first indication information, and the first indication information is used to indicate a recommendation from the first AP regarding a channel to be used by the first STA during the first predetermined service period.

131. The communication device according to any one of claims 125 to 130, wherein the first information is carried in a first message, and the first message is used to respond to a request for establishing the first predetermined service period.

132. The communication device according to claim 131, wherein the first message comprises a first element, the first element comprises a first field, and the first field is used to carry the first operation parameter.

133. The communication device according to claim 132, wherein the first element further comprises a second field, and the second field is used to carry first indication information.

134. The communication device according to claim 132 or 133, wherein the first element further comprises a third field, and the third field is used to indicate whether the first field is valid.

135. The communication device according to claim 134, wherein the third field is further used to indicate capability information of the first AP during the first predetermined service period.

136. The communication device according to any one of claims 133 to 135, wherein the first element further comprises a fourth field, and the fourth field is used to indicate whether the second field is valid.

137. The communication device according to any one of claims 127 to 136, wherein the second information is carried in a second message, and the second message is used to request establishment of the first predetermined service period.

138. The communication device according to claim 137, wherein the second message comprises a second element, the second element comprises a fifth field, and the fifth field is used to carry the first feedback information.

139. The communication device according to claim 138, wherein the second element further comprises a sixth field, and the sixth field is used to carry a second operation parameter.

140. The communication device according to claim 138 or 139, wherein the second element further comprises a seventh field, and the seventh field is used to indicate whether the fifth field is valid.

141. The communication device according to claim 139 or 140, wherein the second element further comprises an eighth field, and the eighth field is used to indicate whether the sixth field is valid.

142. The communication device according to any one of claims 130 to 141, wherein the receiving module is further configured to:
after successfully establishing the first predetermined service period, exchange, during the first predetermined service period, frames with the first AP on a primary channel and/or a secondary channel, wherein a subchannel or subband corresponding to the primary channel and/or the secondary channel is comprised in the subchannel or subband corresponding to the first operation parameter indicated by the first message.

143. The communication device according to claim 142, wherein the receiving module is further configured to:
before the first STA performs frame exchange with the first AP on the primary channel and/or the secondary channel, receive an initial control frame transmitted by the first AP, wherein the initial control frame is used to instruct the first STA to switch to the subchannel or subband indicated by the first operation parameter.

144. The communication device according to claim 143, wherein the initial control frame comprises one or more of the following information:
switching delay information of the first STA;
identification information of the first STA; or
an operating subchannel or subband corresponding to the first STA.

145. The communication device according to claim 143 or 144, wherein the initial control frame is a multi-user request to send MU-RTS frame or a buffer status report poll BSRP frame.

146. The communication device according to any one of claims 125 to 129, wherein the first information is carried in a first frame within the first predetermined service period.

147. The communication device according to claim 146, wherein the first frame is generated based on a second frame of the first STA, and the second frame carries first feedback information.

148. The communication device according to claim 146 or 147, wherein the receiving module is further configured to:
exchange, during the first predetermined service period, frames with the first AP on a primary channel and/or a secondary channel, wherein a subchannel or subband corresponding to the primary channel and/or secondary channel is comprised in the subchannel or subband corresponding to the first operation parameter indicated by the first frame.

149. The communication device according to any one of claims 127 to 148, wherein the transmitting module is further configured to:
transmit third information to the first AP, wherein the third information is used to indicate that a service period is the first predetermined service period.

150. The communication device according to claim 149, wherein the third information is carried in a third element, the third element is carried in a third message, and the third message is used to request establishment of the first predetermined service period.

151. The communication device according to any one of claims 125 to 150, wherein the receiving module is further configured to:
receive fourth information transmitted by the first AP, wherein the fourth information is used to indicate that a service period is the first predetermined service period.

152. The communication device according to claim 151, wherein the fourth information is carried in a fourth element, the fourth element is carried in a fourth message, and the fourth message is used to respond to a request for establishing the first predetermined service period.

153. The communication device according to any one of claims 125 to 152, wherein the receiving module is further configured to:
receive fifth information transmitted by the first AP, wherein the fifth information is used to indicate whether the first STA is required to switch back to a primary channel when a frame exchange sequence on a secondary channel ends within the first predetermined service period.

154. The communication device according to claim 153, wherein the fifth information is carried in a fifth element, the fifth element is carried in a fifth message, and the fifth message is used to respond to a request for establishing the first predetermined service period, or the fifth message is carried in a beacon frame within the first predetermined service period.

155. The communication device according to any one of claims 125 to 154, wherein the receiving module is further configured to:
receive sixth information transmitted by the first AP, wherein the sixth information is used to indicate that the first AP supports the first predetermined service period.

156. The communication device according to claim 155, wherein the sixth information is carried in a sixth element, and the sixth element is carried in a beacon frame within the first predetermined service period.

157. The communication device according to any one of claims 127 to 156, wherein the transmitting module is further configured to:
transmit seventh information to the first AP, wherein the seventh information is used to indicate that the first STA supports the first predetermined service period.

158. The communication device according to claim 157, wherein the seventh information is carried in a seventh element, and the seventh element is carried in an association request frame or a probe request frame within the first predetermined service period.

159. The communication device according to any one of claims 125 to 158, wherein the first predetermined service period is a restricted target wake time R-TWT service period SP.

160. The communication device according to claim 159, wherein the first information is used to update a parameter related to a dynamic subband/subchannel operation (DSO operation) among a parameter of the R-TWT SP.

161. The communication device according to claim 160, wherein the first information is carried in a response message of the R-TWT or an information frame of the R-TWT.

162. The communication device according to claim 159, wherein the first information is used to update a DSO operation parameter within the R-TWT SP.

163. The communication device according to claim 162, wherein the first information is carried in a channel state information CSI frame or a data frame within the R-TWT SP.

164. The communication device according to claim 162 or 163, wherein a range of the subchannel or subband indicated by the updated DSO operation parameter is smaller than a range of the subchannel or subband indicated by the parameter of the R-TWT SP.

165. A communication device, comprising a transceiver, a memory, and a processor, wherein the memory is configured to store a program, the processor is configured to invoke the program from the memory and control the transceiver to receive or transmit a signal, so that the terminal executes the method according to any one of claims 1 to 42.

166. A communication device, comprising a transceiver, a memory, and a processor, wherein the memory is configured to store a program, the processor is configured to invoke the program from the memory and control the transceiver to receive or transmit a signal, so that the network device executes the method according to any one of claims 43 to 82.

167. An apparatus, comprising a processor, configured to invoke a program from a memory, so that the apparatus executes the method according to any one of claims 1 to 42 or 43 to 82.

168. A chip, comprising a processor, configured to invoke a program from a memory, so that a device equipped with the chip executes the method according to any one of claims 1 to 42 or 43 to 82.

169. A computer-readable storage medium storing a program, wherein the program causes a computer to execute the method according to any one of claims 1 to 42 or 43 to 82.

170. A computer program product, comprising a program, wherein the program causes a computer to execute the method according to any one of claims 1 to 42 or 43 to 82.

171. A computer program, wherein the computer program causes a computer to execute the method according to any one of claims 1 to 42 or 43 to 82.
